# EUROPEAN PATENT APPLICATION

(11) **EP 4 779 450 A1**
(43) Date of publication of application: **22.07.2026**
(21) Application number: 24882635.6
(22) Date of filing: 04.09.2024
(51) Int. Cl.: G06F 3/04845, G06F 3/0486, G06F 3/04883

(54) **ELECTRONIC DEVICE FOR CHANGING STYLE OF HANDWRITTEN CONTENT AND METHOD THEREOF**

(30) Priority: 25.10.2023 KR 20230144191; 14.11.2023 KR 20230157711
(71) Applicant: Samsung Electronics Co., Ltd., Suwon-si, Gyeonggi-do 16677 (KR)
(72) Inventor: KIM, Dohyeon, Suwon-si Gyeonggi-do 16677 (KR); PARK, Soonsang, Suwon-si Gyeonggi-do 16677 (KR); SON, Minji, Suwon-si Gyeonggi-do 16677 (KR); LEE, Jeongpyo, Suwon-si Gyeonggi-do 16677 (KR); LEE, Junseok, Suwon-si Gyeonggi-do 16677 (KR); HAN, Yonggil, Suwon-si Gyeonggi-do 16677 (KR)
(74) Representative: Nederlandsch Octrooibureau
(86) International application number: PCT/KR2024/013358
(87) International publication number: WO 2025/089606

(57) **Abstract**

A processor of an electronic device according to an embodiment may display, in a display, a stroke representing a path, along which an external object is dragged, on the display on the basis of the detection of the external object dragged on the display. The processor may execute a function for removing a noise segment, which is detected by using a plurality of points included in the stroke, from the stroke in response to the noise segment of the stroke. The processor may change the shape of at least one of a plurality of strokes by using a model for changing the penmanship of one or more characters represented by the plurality of strokes including the stroke from which the noise segment has been removed.

## Description

### [Technical Field]

The present disclosure relates to an electronic device for changing a style (e.g., penmanship) of a handwriting content and a method thereof.

### [Background Art]

An electronic device that extracts text from handwriting indicated by strokes drawn by a user is being developed. For example, a user may draw strokes representing handwriting, by moving a finger or a stylus pen contacted on a display of the electronic device or by moving a pointing device (e.g., a mouse) connected to the electronic device. From the strokes, the electronic device may identify a character such as an alphabet. Based on identifying one or more characters, the electronic device may identify text including the one or more characters.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, an electronic device may comprise a display, memory, comprising one or more storage media, storing instructions, and at least one processor comprising processing circuitry. The instructions, when executed individually or collectively by the at least one processor, may cause the electronic device to, based on detecting an external object being dragged on the display, display, within the display, a stroke representing a path on the display along which the external object is dragged. The instructions, when executed individually or collectively by the at least one processor, may cause the electronic device to, in response to a noise segment of the stroke that is detected by using a plurality of points included in the stroke, execute a function to delete the noise segment from the stroke. The instructions, when executed individually or collectively by the at least one processor, may cause the electronic device to, by using a model to modify penmanship of one or more characters represented by a plurality of strokes including the stroke of which the noise segment is deleted, modify a shape of at least one of the plurality of strokes.

In an embodiment, a method of an electronic device comprising a display and a processor is provided. The method may comprise, based on detecting an external object being dragged on the display, displaying, within the display, a stroke representing a path on the display along which the external object is dragged. The method may comprise, in response to a noise segment of the stroke that is detected by using a plurality of points included in the stroke, executing a function to delete the noise segment from the stroke. The method may comprise, by using a model to modify penmanship of one or more characters represented by a plurality of strokes including the stroke of which the noise segment is deleted, modifying a shape of at least one of the plurality of strokes.

According to an embodiment, an electronic device may comprise a display, and a processor. The processor may be configured to, based on detecting an external object being dragged on the display, identify an input indicating to draw a plurality of first strokes. The processor may be configured to execute a preprocess function to reduce a serif formed at an end of at least one of the plurality of first strokes. The processor may be configured to display, within the display, a plurality of second strokes which are corresponding to the plurality of first strokes modified by the preprocess function and are having a second penmanship different from a first penmanship of the plurality of first strokes.

In an embodiment, a method of an electronic device comprising a display and a processor is provided. The method may comprise, based on detecting an external object being dragged on the display, identifying an input indicating to draw a plurality of first strokes. The method may comprise executing a preprocess function to reduce a serif formed at an end of at least one of the plurality of first strokes. The method may comprise displaying, within the display, a plurality of second strokes which are corresponding to the plurality of first strokes modified by the preprocess function and are having a second penmanship different from a first penmanship of the plurality of first strokes.

### [Description of the Drawings]

FIG. 1 illustrates an exemplary operation of an electronic device that modifies a shape of at least one of a plurality of strokes included in a handwriting content.
FIG. 2 illustrates an exemplary block diagram of an electronic device according to an embodiment.
FIG. 3 illustrates an exemplary flowchart for describing an operation of an electronic device according to an embodiment.
FIG. 4 illustrates an exemplary operation of an electronic device for displaying a stroke including a plurality of points connected to each other.
FIGS. 5A and 5B illustrate exemplary flowcharts for describing an operation of an electronic device according to an embodiment.
FIGS. 6A and 6B illustrate an exemplary operation of an electronic device associated with a noise segment (e.g., a serif) included in a stroke.
FIG. 7 illustrates an exemplary structure of a penmanship modification model included in an electronic device according to an embodiment.
FIG. 8 illustrates an exemplary flowchart for describing an operation of an electronic device associated with a penmanship modification model.
FIG. 9 illustrates an exemplary flowchart for describing an operation of an electronic device that optimizes a handwriting content to be transmitted to an external electronic device using a penmanship modification model.
FIG. 10 illustrates an exemplary flowchart for describing an operation of an electronic device associated with a penmanship modification model.
FIG. 11 illustrates an exemplary flowchart for describing an operation of an electronic device associated with a penmanship modification model.
FIG. 12 illustrates an exemplary flowchart for describing an operation of an electronic device associated with a penmanship modification model.
FIG. 13 is a block diagram of an electronic device in a network environment according to various embodiments.

### [Mode for Invention]

Hereinafter, various embodiments of the present document are described with reference to the accompanying drawings.

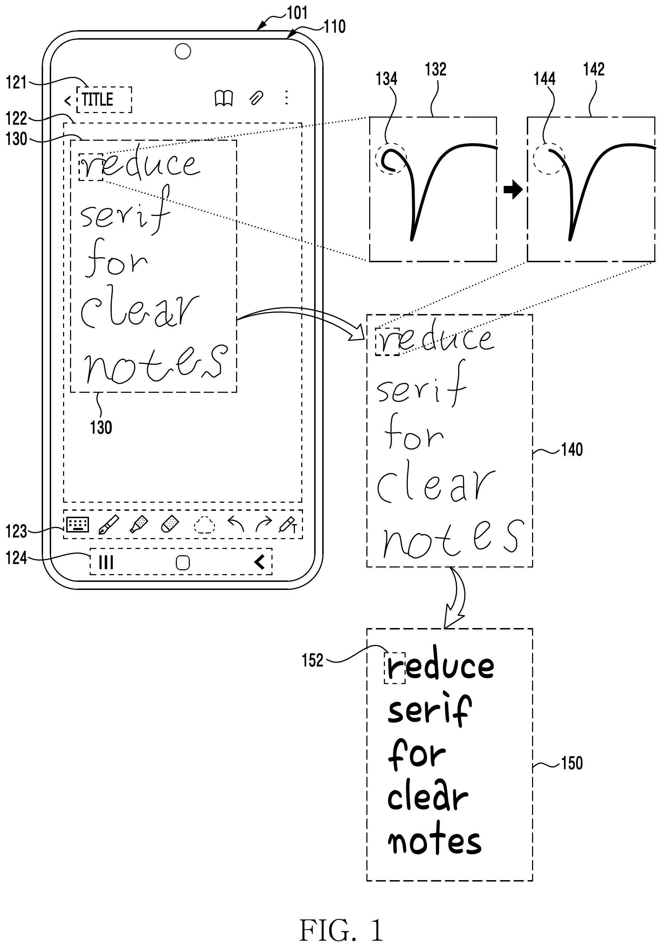

FIG. 1 illustrates an exemplary operation of an electronic device 101 that modifies a shape of at least one of a plurality of strokes included in a handwriting content. In an embodiment, in terms of being owned by a user, the electronic device 101 may be referred to as a terminal (or a user terminal). The terminal may include, for example, a personal computer (PC) such as a laptop and a desktop. The terminal may include, for example, a smartphone, a smart pad, and/or a tablet PC. The terminal may include a smart accessory such as a smartwatch and/or a head-mounted device (HMD).

Referring to FIG. 1, an exemplary screen displayed on a display 110 of the electronic device 101 is illustrated. Hereinafter, the screen may refer to a user interface (UI) displayed in at least a portion of the display 110. The screen may include, for example, an activity of a Windows operating system and/or an activity of an Android operating system. An embodiment is not limited thereto, and the screen may be formed in an external space by light outputted from the electronic device 101 to the external space. For example, in the external space, the screen may be formed on a plane on which the light is projected. For example, the screen may be three-dimensionally displayed in a form of a hologram within the external space. The screen displayed on the display 110 exemplarily illustrated in FIG. 1 may be displayed by the electronic device 101 executing a software application (hereinafter, a handwriting application) to manage a handwriting content.

Hereinafter, the handwriting content may include writings (e.g., handwriting and/or hand-drawing), which are digitized information stored in the electronic device 101. The embodiment is not limited thereto, and the handwriting content may further include a text, an image, a video, an audio, or any combination thereof. The handwriting content may include at least one stroke, generated by an action of the user to write a character and/or draw a picture. The action may include an action of dragging a finger on the display 110 and/or contacting a stylus pen on the display 110.

Hereinafter, a stroke may refer to a movement route, path, or trajectory of an external object (e.g., the user's fingertip and/or the stylus pen) contacted on the display 110. For example, a character "+" drawn on the display 110 by using the stylus pen may include a first stroke that is a path in a vertical direction of the stylus pen contacted on the display 110, and a second stroke that is a path in a horizontal direction of the stylus pen contacted on the display 110.

According to an embodiment, based on detecting an external object being dragged on the display 110, the electronic device 101 may display, within the display 110, a stroke representing a path on the display 110 along which the external object is dragged. In a case that the external object is repeatedly contacted on the display 110, the electronic device 101 may display strokes respectively corresponding to paths of the external object repeatedly contacted on the display 110.

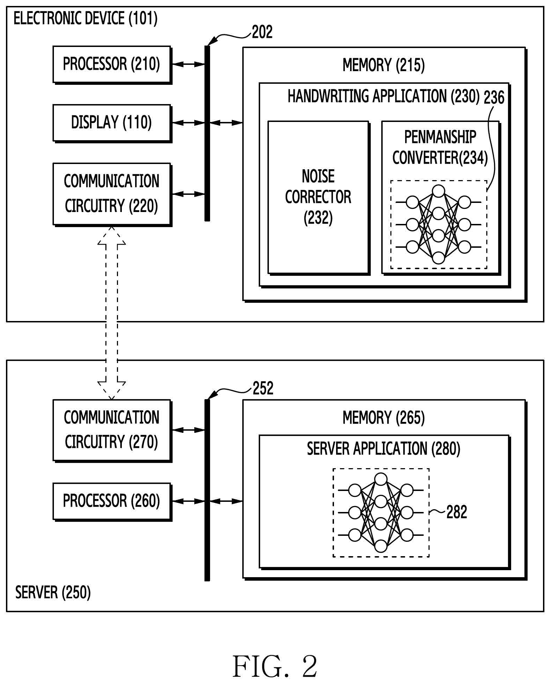

Referring to FIG. 1, an exemplary screen displayed by the electronic device 101 receiving a handwriting content including one or more strokes is illustrated. The screen displayed on the display 110 may include a visual object 121 indicating a title of the handwriting content. Within the display 110, the electronic device 101 may display an area 122 to receive an input indicating a drawing of the one or more strokes. The area 122 may be referred to as a body area of the handwriting content. The electronic device 101 may display at least a portion of the handwriting content in the area 122. The electronic device 101 may display executable objects associated with editing of the handwriting content in the area 123 of the display 110. In an embodiment, an area 123 may be referred to as a toolbar. The electronic device 101 may display executable objects (e.g., a home button, a back button and/or an application switching button) to switch a software application executed based on the display 110, in an area 124 of the display 110. The area 124 may be referred to as a navigation bar. An exemplary hardware configuration included in the electronic device 101 to display the screen of FIG. 1 will be described with reference to FIG. 2.

In an embodiment, the electronic device 101 detecting the external object contacted on the area 122 may visualize, based on a path along which the external object is dragged, a stroke representing the path. Referring to FIG. 1, an exemplary state in which a plurality of strokes 130 are displayed in the area 122 is illustrated. The plurality of strokes 130 may represent a combination of a plurality of characters (e.g., a text such as "reduce serif for clear notes"). According to an embodiment, the electronic device 101 may perform an operation for modifying penmanship of characters represented by the plurality of strokes 130. The penmanship may be a characteristic included in handwriting, and may be distinguished by a manner of drawing a stroke, a thickness of the stroke, and/or an appearance, a shape, and/or dimensions (e.g., a width, a height, an aspect ratio, and/or a size) of a character represented by at least one stroke. The penmanship may be associated with a habit and/or a manner of the user drawing the stroke. The penmanship may be referred to as a style. The penmanship may differ from a font (e.g., a typeface) of a digitized text represented by binary codes according to an encoding standard such as Unicode (or American Standard Code for Information Interchange (ASCII)).

Referring to FIG. 1, in a state of receiving a user input to draw the plurality of strokes 130 through the display 110, the electronic device 101 may modify the penmanship of the text represented by the plurality of strokes 130. For example, in order to improve the clarity, readability, and/or visibility of the text, the electronic device 101 may modify at least one of the plurality of strokes 130. For example, the electronic device 101 may modify a shape, a size, a position, and/or a length of the at least one of the plurality of strokes 130, or may delete at least one segment of the plurality of strokes 130.

In an embodiment, since the display 110 includes a material different from paper, the external object (e.g., the finger and/or the stylus pen) contacted on the display 110 may move differently from an external object on the paper. For example, since the display 110 has a friction coefficient different from that of the paper, the stylus pen contacted on the display 110 may slide relatively more easily than in a case of being contacted on paper. Due to the above-described characteristic of the display 110, the plurality of strokes 130 drawn within the display 110 by tracking a motion of the stylus pen contacted on the display 110 may include one or more noise segments.

Referring to FIG. 1, among the plurality of strokes 130, a stroke 132 representing the alphabet "r" is exemplarily illustrated. An unintended motion (e.g., skidding) of the stylus pen on the display 110 may cause an occurrence of a noise segment 134 within the stroke 132. The noise segment 134 generated at an end (e.g., a beginning point and/or a terminal point) of the stroke 132 is exemplarily illustrated, but the embodiment is not limited thereto. The noise segment 134 may mean a portion of the stroke 132 that interferes with recognition of a character (e.g., the alphabet "r") corresponding to the stroke 132, or causes a character different from the character to be recognized. The noise segment 134 may include a curved portion at the end of the stroke 132, such as a serif. Referring to FIG. 1, the noise segment 134 having a spiral shape, which is generated by the skidding of the stylus pen, may correspond to a portion of the stroke 132 that does not match a shape of the alphabet "r".

According to an embodiment, the electronic device 101 may execute a function to delete the noise segment 134 (e.g., the serif) included in the stroke 132. The electronic device 101 may execute the function for each of the plurality of strokes 130. Referring to FIG. 1, a plurality of strokes 140, which are results in which noise segments (e.g., the noise segment 134) included in the plurality of strokes 130 are deleted based on execution of the function, are exemplarily illustrated. Referring to a stroke 142, which is a result in which the noise segment 134 included in the stroke 132 is deleted based on execution of the function, a portion 144 of the stroke 142 corresponding to the noise segment 134 may not include a curved portion such as a serif. The electronic device 101 executing the function may obtain, or display, the plurality of strokes 140 having improved visibility based on deletion of the noise segment 134.

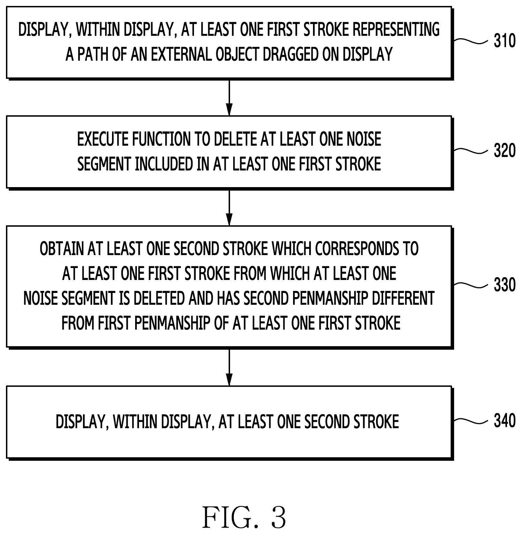

In an embodiment, the electronic device 101 may modify penmanship of one or more characters represented by the plurality of strokes 140 including the stroke 142 of which the noise segment 134 is deleted. For example, the electronic device 101 may modify a shape of at least one of the plurality of strokes 140, to modify penmanship represented by the plurality of strokes 140 to designated penmanship (e.g., penmanship of an expert) having at least one of an aesthetic characteristic, visibility, and/or readability. In order to modify the penmanship of the one or more characters, a model such as an artificial neural network (or a neural network) may be used. An exemplary operation of the electronic device 101 that modifies the shape of the at least one of the plurality of strokes 140 by using the model will be described with reference to FIG. 3.

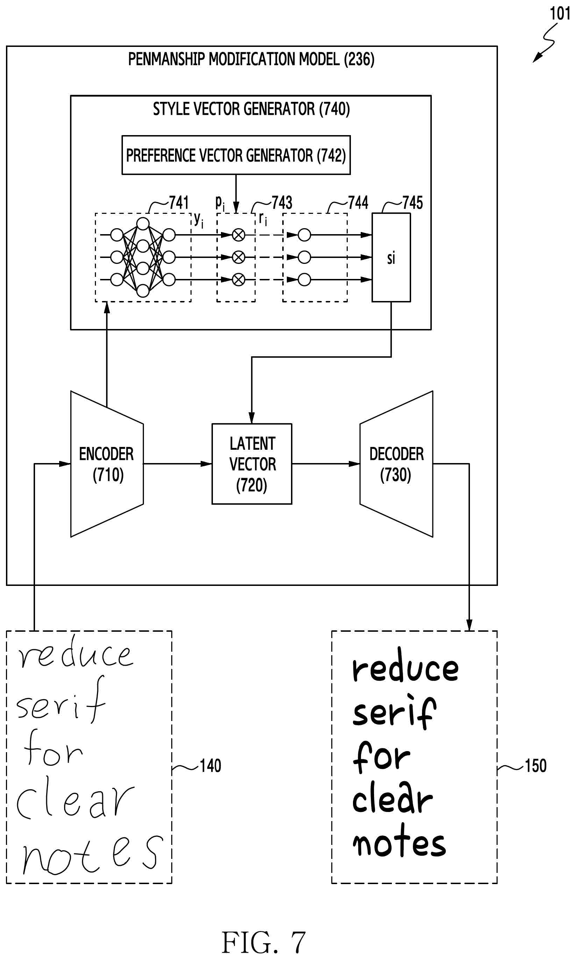

Referring to FIG. 1, a plurality of strokes 150, which are results of modifying the shape of the at least one of the plurality of strokes 140 according to modification of penmanship, are exemplarily illustrated. The electronic device 101 that displays the plurality of strokes 130 corresponding to the user input received through the area 122 may generate or display the plurality of strokes 140 from the plurality of strokes 130 based on detection and/or deletion of a noise segment. The electronic device 101 that generates the plurality of strokes 140 may generate or display the plurality of strokes 150 from the plurality of strokes 140 based on modification of penmanship. The electronic device 101 may generate the stroke 142 from the stroke 132 corresponding to the alphabet "r" based on deletion of the noise segment 134. The electronic device 101 may generate a stroke 152 from the stroke 142 based on modification of penmanship. For example, an operation of the electronic device 101 to modify penmanship may include a two-step process including a first operation of deleting a noise segment and a second operation of modifying penmanship. The first operation of the electronic device 101 to delete the noise segment 134 will be described with reference to FIGS. 3 to 5A and/or FIG. 5B, and FIGS. 6A and/or 6B. The second operation of the electronic device 101 to modify penmanship will be described with reference to FIGS. 7 to 12.

As described above, in an embodiment, the electronic device 101 may execute a function for deleting or reducing the noise segment (e.g., the noise segment 134) included in the plurality of strokes 130 in order to modify the penmanship of the text represented by the plurality of strokes 130. By using the plurality of strokes 140 obtained by executing the function, the electronic device 101 may execute a function to modify the penmanship. By deleting the noise segment, the electronic device 101 may improve the modification of the penmanship and/or accuracy of handwriting recognition. For example, the plurality of strokes 150 generated based on the modification of the penmanship may not include the noise segment 134 included in the plurality of strokes 130 that were initially identified through the user input. As the noise segment 134 is deleted, the electronic device 101 may display the plurality of strokes 150 having improved visibility and/or readability.

Hereinafter, with reference to FIG. 2, a hardware configuration and one or more programs included in the electronic device 101 to perform the above-described two-step process will be exemplarily described.

FIG. 2 illustrates an exemplary block diagram of an electronic device 101 according to an embodiment. The electronic device 101 of FIG. 1 may include a hardware configuration of the electronic device 101 exemplarily illustrated in FIG. 2.

Referring to FIG. 2, according to an embodiment, the electronic device 101 may include at least one of a processor 210, memory 215, a display 110, or communication circuitry 220. The processor 210, the memory 215, the display 110, and the communication circuitry 220 may be electronically and/or operably coupled with each other by an electronic component such as a communication bus 202. Hereinafter, hardware components being electronically and/or operably coupled may mean that a direct or an indirect connection between hardware components is established by wire or wirelessly so that a second hardware component is controlled by a first hardware component among the hardware components. Although illustrated based on different blocks, an embodiment is not limited thereto, and a portion (e.g., the processor 210, the memory 215, and the communication circuitry 220) of the hardware components of FIG. 2 may be included in a single integrated circuit such as a system on a chip (SoC). A type and/or the number of the hardware components included in the electronic device 101 is not limited as illustrated in FIG. 2. For example, the electronic device 101 may include only a portion of the hardware components illustrated in FIG. 2.

According to an embodiment, the processor 210 of the electronic device 101 may include a hardware component for processing data based on one or more instructions. For example, the hardware component for processing data may include an arithmetic and logic unit (ALU), a floating point unit (FPU), a field programmable gate array (FPGA), a central processing unit (CPU), and/or an application processor (AP). The number of processors 210 may be one or more. For example, the first processor 210 may have a structure of a multi-core processor such as a dual core, a quad core, a hexa core, or an octa core.

According to an embodiment, the memory 215 of the electronic device 101 may include a hardware component for storing data and/or instructions inputted to or outputted from the processor 210. The memory 215 may include, for example, a volatile memory such as a random-access memory (RAM) and/or a non-volatile memory such as a read-only memory (ROM). The volatile memory may include, for example, at least one of a dynamic RAM (DRAM), a static RAM (SRAM), a cache RAM, or a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disc, a solid state drive (SSD), or an embedded multimedia card (eMMC).

According to an embodiment, the display 110 of the electronic device 101 may output visualized information (e.g., the screen illustrated in FIG. 1) to a user. For example, the display 110 may be configured to visualize information provided by a graphic processing unit (GPU) and/or the processor 210. The display 110 may include a liquid crystal display (LCD), a plasma display panel (PDP), and/or light emitting diodes (LEDs). The LED may include an organic LED (OLED). The display 110 may include a flat display (FPD) and/or electronic paper (electronic paper). The embodiment is not limited thereto, and the display 110 may have at least a partially curved shape or a deformable shape. The display 110 having a deformable shape may be referred to as a flexible display.

According to an embodiment, the display 110 of the electronic device 101 may include a sensor (e.g., a touch sensor panel (TSP)) to detect an external object (e.g., a finger of the user) on the display 110. For example, based on the TSP, the electronic device 101 may detect an external object contacting the display 110 or floating on the display 110. In response to detecting the external object, the electronic device 101 may execute a function associated with a specific visual object corresponding to a position of the external object on the display 110 among visual objects displayed in the display 110.

According to an embodiment, the display 110 of the electronic device 101 may include a panel (e.g., a digitizer) to detect a stylus pen. The stylus pen adjacent to the display 110 may include circuitry activated by a magnetic field (or an electric field) formed by the panel. Using the circuitry, the stylus pen may transmit a signal to detect a position of the stylus pen on the display 110. Using the signal, the processor 210 may calculate or determine the position of the stylus pen floating on the display 110 and/or contacted on the display 110.

According to an embodiment, the communication circuitry 220 of the electronic device 101 may include hardware to support transmission and/or reception of an electrical signal between the electronic device 101 and an external electronic device (e.g., a server 250). The communication circuitry 220 may include, for example, at least one of a modem (MODEM), an antenna, and an optic/electronic (O/E) converter. The communication circuitry 220 may support transmission and/or reception of an electrical signal based on various types of protocols such as ethernet, a local area network (LAN), a wide area network (WAN), wireless fidelity (WiFi), near field communication (NFC), Bluetooth, bluetooth low energy (BLE), ZigBee, long term evolution (LTE), fifth generation (5G) new radio (NR), sixth generation (6G), and/or above-6G.

As an example for detecting the stylus pen, a panel in the display 110 referred to as the digitizer is illustrated, but the embodiment is not limited thereto. For example, the electronic device 101 may wirelessly receive, through the communication circuitry 220, a signal (e.g., a beacon signal) indicating a position of the stylus pen from the stylus pen. By using the signal, the processor 210 may detect the position of the stylus pen projected onto the display 110. The electronic device 101 may receive the signal from the stylus pen paired with the electronic device 101 based on a wireless communication protocol such as Bluetooth low energy (BLE).

Although not illustrated, the electronic device 101 may include an output means to output information in a form other than a visualized form. For example, the electronic device 101 may include a speaker to output an acoustic signal. For example, the electronic device 101 may include a motor to provide haptic feedback based on vibration.

Referring to FIG. 2, the server 250 connected to the electronic device 101 through the communication circuitry 220 is illustrated. The server 250 may include at least one of a processor 260, memory 265, or communication circuitry 270. The processor 260, the memory 265, and the communication circuitry 270 may be electrically and/or operably coupled with each other by an electronic component such as a communication bus 252. The processor 260, the memory 265, and the communication circuitry 270 of the server 250 may perform functions substantially identical to or similar to those of the processor 210, the memory 215, and the communication circuitry 220 included in the electronic device 101, respectively. Among descriptions of the processor 260, the memory 265, and the communication circuitry 270 of the server 250, a description overlapping with each of the processor 210, the memory 215, and the communication circuitry 220 included in the electronic device 101 may be omitted.

Referring to FIG. 2, in the memory 215, one or more instructions (or commands) indicating a calculation and/or an operation to be performed by the processor 210 on data may be stored. A set of the one or more instructions may be referred to as firmware, an operating system, a process, a routine, a sub-routine, and/or a software application (hereinafter, an application). Similarly, in the memory 265 of the server 250, one or more instructions indicating a calculation and/or an operation to be performed by the processor 260 on data may be stored. The processor 210 of the electronic device 101 and/or the processor 260 of the server 250 may perform at least one of operations described with reference to FIGS. 3 to 12 when a set of a plurality of instructions distributed in a form of an operating system, firmware, a driver, and/or an application is executed.

Hereinafter, an application being installed in the electronic device 101 and/or the server 250 may mean that one or more instructions provided in a form of the application are stored in the memory 215 of the electronic device 101 and/or the memory 265 of the server 250, and that the one or more applications are stored in an executable format (e.g., a file having an extension designated by an operating system of the electronic device 101 and/or the server 250) executable by the processor 210 of the electronic device 101 and/or the processor 260 of the server 250.

Referring to FIG. 2, a server application 280 is illustrated as an exemplary application installed in the memory 265 of the server 250. The processor 260 executing the server application 280 may control the communication circuitry 270 to establish or unlink (or disconnect) a communication link with one or more user terminals (e.g., the electronic device 101). Through the communication link, the processor 260 may obtain information associated with a handwriting content transmitted from the electronic device 101.

Referring to FIG. 2, a handwriting application 230 is illustrated as an exemplary application installed in the memory 215 of the electronic device 101. The handwriting application 230 may be installed in the memory 215 to perform functions for generating, modifying, and/or deleting a handwriting content. The processor 210 executing the handwriting application 230 may detect or identify, by tracking a motion of an external object (e.g., the finger of the user and/or the stylus pen) contacted on the display 110, one or more strokes (e.g., the plurality of strokes 130 of FIG. 1) indicated by the motion. The processor 210 may display a screen including an area (e.g., the area 122 of FIG. 1) provided from the handwriting application 230 and capable of detecting the one or more strokes.

Referring to FIG. 2, the handwriting application 230 may include a function and/or a sub-routine to modify at least one stroke included in handwriting content. Referring to FIG. 2, instances in the handwriting application 230 to execute the function (e.g., a noise corrector 232 and/or a penmanship converter 234) are illustrated. An instance (or a process) may refer to a unit of one or more operations performed by the processor 210 executing a program such as the handwriting application 230.

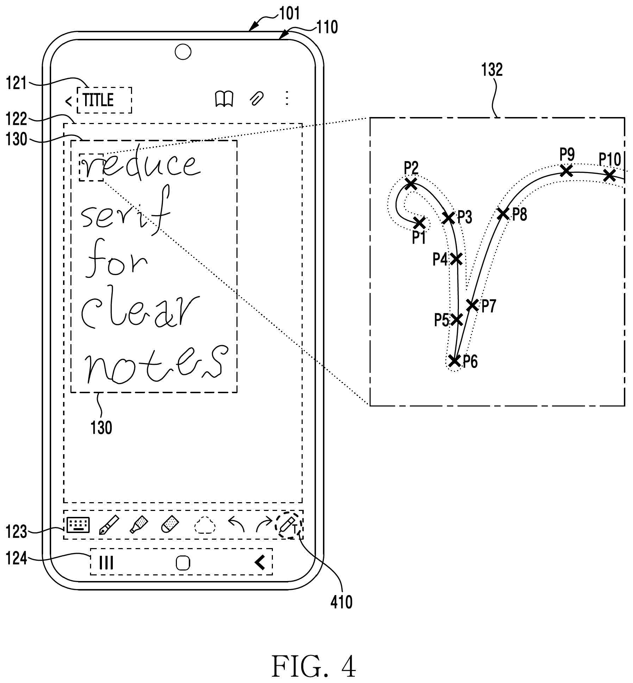

In an embodiment, the processor 210 executing the noise corrector 232 may detect or delete a noise segment (e.g., the noise segment 134 of FIG. 1) such as a serif by analyzing one or more strokes indicated by a user input. By executing the noise corrector 232, the processor 210 may extract or generate feature information associated with the one or more strokes. The feature information is exemplarily described with reference to FIG. 4. The processor 210 executing the noise corrector 232 may detect or determine a noise segment within a stroke corresponding to the feature information by using the feature information. The processor 210 executing the noise corrector 232 may delete or modify the detected noise segment from the stroke. The noise corrector 232 may be executed to perform a first operation among a two-step process to modify penmanship.

In an embodiment, the processor 210 executing the penmanship converter 234 may at least partially modify a shape of one or more strokes (e.g., one or more strokes represented by a user input and/or one or more strokes generated based on execution of the noise corrector 232) (e.g., transformation). For example, the processor 210 executing the penmanship converter 234 may perform computations associated with a penmanship modification model 236 to combine different penmanship or to generate one or more strokes to which specific penmanship is applied. Based on execution of the penmanship converter 234, the processor 210 may modify penmanship of a plurality of strokes represented by a user input. Based on modification of penmanship, the processor 210 may generate or display aesthetic strokes.

Referring to FIG. 1, the penmanship modification model 236 may be provided as at least a portion of the handwriting application 230. A model including the penmanship modification model 236 may include hardware (e.g., a neural processing unit (NPU) and/or GPU), software, or any combination thereof, simulating intellectual activities (e.g., cognition, learning, reasoning, and/or creation) of a living organism including a human. The model may include an artificial neural network, which is a mathematical model of neural activities for the intellectual activities. For driving the penmanship modification model 236, interconnections of neurons (and/or perceptrons), which are units of neural activities, and/or weights assigned to the interconnections may be stored in the memory 215.

In an embodiment, the penmanship modification model 236 may include information for simulating the neural activities by using a topology such as a convolutional neural network (CNN), a recurrent neural network (RNN), and/or a feedforward neural network (FFN). The embodiment is not limited thereto, and the penmanship modification model 236 may include a generative model having a structure based on a transformer such as bidirectional encoder representations from transformers (BERT) and/or generative pre-trained transformer (GPT). By using the penmanship modification model 236, the processor 210 of the electronic device 101 may modify a plurality of strokes included in a handwriting content. For example, the penmanship modification model 236 may be trained such that only penmanship indicated by the plurality of strokes is modified while maintaining an association between the plurality of strokes and at least one character.

In an embodiment, the electronic device 101 may obtain, from the server 250 connected through the communication circuitry 220, information associated with driving and/or updating of the penmanship modification model 236. To provide the information, the processor 260 of the server 250 may execute the server application 280. The server application 280 may include a penmanship modification model 282 corresponding to the penmanship modification model 236. The processor 260 of the server 250 may obtain, by using the penmanship modification model 282, information for modifying or updating a penmanship modification model (e.g., the penmanship modification model 236) stored in a plurality of user terminals including the electronic device 101. For example, the penmanship modification model 282 stored in the server 250 may correspond to the penmanship modification model 236 stored in the electronic device 101. The embodiment is not limited thereto, and the penmanship modification model 282 may be a base model (e.g., a teacher model of knowledge distillation) used for training of the penmanship modification model 236.

For example, the processor 260 of the server 250 may perform training of the penmanship modification model 282 based on massive handwriting contents. By using the penmanship modification model 282 including parameters (e.g., weights) tuned based on the training, the processor 260 of the server 250 may perform an operation to update the penmanship modification model 236 of the electronic device 101. For example, the processor 260 may train the penmanship modification model 282 such that penmanship and/or a style of a handwriting content is modified between various penmanship and/or styles.

In an embodiment, for training of the penmanship modification model 282, handwriting contents of an expert specialized in one or more penmanship may be used. The embodiment is not limited thereto, and for training of the penmanship modification model 282, handwriting contents collected from a famous person and/or a general user may be used. The handwriting contents may include strokes representing a natural language sentence including various alphabets and/or characters, such as a pangram text. The embodiment is not limited thereto, and the processor 260 of the server 250 may obtain a handwriting content for training of the penmanship modification model 282 by communicating with a user terminal (e.g., the electronic device 101) connected through the communication circuitry 270. To obtain the handwriting content, the processor 260 may obtain a handwriting content managed by the handwriting application 230 from the handwriting application 230 executed by the processor 210 of the electronic device 101.

Referring to FIG. 2, in an embodiment in which the penmanship modification model 282 stored in the server 250 is trained, the processor 260 may transmit, to the electronic device 101 connected through the communication circuitry 270, information (e.g., an order of weights and/or computations designated for driving of the penmanship modification model 282) associated with the penmanship modification model 282. For example, the processor 260 of the server 250 may transmit the information to update the penmanship modification model 236 installed in the electronic device 101.

In an embodiment, the processor 210 of the electronic device 101 that receives information associated with the penmanship modification model 282 may tune the penmanship modification model 236 by using the information (e.g., fine-tuning). The penmanship modification model 236 may include all parameters associated with the penmanship modification model 282 stored in the server 250. The embodiment is not limited thereto, and the penmanship modification model 236 may include only a portion of the parameters associated with the penmanship modification model 282 based on an algorithm such as quantization and/or pruning. The penmanship modification model 282 having a larger number of layers and/or parameters than the penmanship modification model 236 may be used for training of the penmanship modification model 236 based on knowledge distillation. The penmanship modification model 282 may operate as a teacher model for the training of the penmanship modification model 236. An exemplary structure of the penmanship modification model 236 managed by the server 250 and/or the electronic device 101 will be described with reference to FIG. 7.

Although an embodiment in which the penmanship modification model 236 of the electronic device 101 is managed or updated based on the penmanship modification model 282 included in the server 250 has been described, the embodiment is not limited thereto. For example, the processor 210 of the electronic device 101 may perform training and/or tuning (e.g., fine-tuning) for the penmanship modification model 236 stored in the memory 215. The processor 210 may receive, from the server 250, information indicating at least a portion of the penmanship modification model 282 as a base model. By using the received information, the processor 210 may initialize the penmanship modification model 236. The processor 210 may further train the initialized penmanship modification model 236 by using one or more handwriting contents obtained from the user of the electronic device 101. Additional training of the penmanship modification model 236 based on the processor 210 may be performed based on available resources (e.g., a capacity of the memory 215 and/or a performance of the processor 210) of the electronic device 101 including the processor 210. In an embodiment in which the penmanship modification model 236 of the electronic device 101 includes the penmanship modification model 282 of the server 250 as a base model, the penmanship modification model 236 may further include at least one layer coupled to the base model.

As described above, according to an embodiment, the electronic device 101 may include the handwriting application 230 and/or the penmanship modification model 236 to modify penmanship of a handwriting content. Hereinafter, with reference to FIG. 3, an exemplary operation performed by the processor 210 of the electronic device 101 executing the handwriting application 230 will be described.

FIG. 3 illustrates an exemplary flowchart for describing an operation of an electronic device according to an embodiment. The operation described with reference to FIG. 3 may be performed by the electronic device 101 of FIGS. 1 and 2 and/or the processor 210 of FIG. 2.

Referring to FIG. 3, in operation 310, a processor of the electronic device according to an embodiment may display, within a display (e.g., the display 110 of FIG. 1 and/or FIG. 2), at least one first stroke representing a path of an external object dragged on the display. The external object of the operation 310 may include a finger and/or a stylus pen contacted on the display for handwriting input. The plurality of strokes 130 of FIG. 1 may be an example of the at least one first stroke of the operation 310.

Referring to FIG. 3, in the operation 310, the processor may identify an input indicating a drawing of the at least one first stroke based on detecting the external object being dragged on the display. In response to the input, the processor may display the at least one first stroke within the display. The processor may store, in memory, information associated with the at least one first stroke. The information stored by the processor will be described with reference to FIG. 4. While displaying the at least one first stroke based on the input, the processor may perform other operations 320, 330, and 340 of FIG. 3. The processor may perform the other operations 320, 330, and 340based on whether a designated option to automatically modify penmanship is activated. The designated option may be changed by a user input identified through a software application to change setting values of the electronic device 101, such as a settings application.

Referring to FIG. 3, in the operation 320, the processor of the electronic device according to an embodiment may execute a function to delete at least one noise segment (e.g., the noise segment 134 of FIG. 1) included in the at least one first stroke. The processor may perform the operation 320 by executing the noise corrector 232 of FIG. 2. The function of the operation 320 may include a preprocess function to reduce a serif formed at an end of the at least one first stroke. Based on execution of the preprocess function, the processor may delete one or more points representing the serif among points indicating the at least one first stroke. Based on the preprocess function, a portion corresponding to the noise segment may be cropped in the at least one first stroke. Based on execution of the function of the operation 320, the portion corresponding to the noise segment may be straightened in the at least one first stroke.

Referring to FIG. 3, in the operation 330, the processor of the electronic device according to an embodiment may obtain at least one second stroke which corresponds to the at least one first stroke from which at least one noise segment is deleted and has a second penmanship different from a first penmanship of the at least one first stroke. The processor may perform the operation 330 by executing the penmanship converter 234 of FIG. 2. The first penmanship of the operation 330 may be penmanship of one or more characters represented by the at least one first stroke and may be penmanship of a user who drew the at least one first stroke on the display. The second penmanship of the operation 330 may be penmanship supported by the handwriting application 230 and/or the penmanship modification model 236 of FIG. 2 and may be penmanship of an expert specialized for penmanship.

Referring to FIG. 3, in the operation 340, the processor of the electronic device according to an embodiment may display, within the display, the at least one second stroke of the operation 340. For example, the processor may display, within the display, the at least one second stroke which corresponds to the at least one first stroke modified by the preprocess function and has the second penmanship different from the first penmanship of the at least one first stroke. The processor may replace the at least one first stroke being displayed within the display based on the operation 310 with the at least one second stroke of the operation 340. Based on the replacement, the processor may provide a user experience similar to correcting the at least one first stroke drawn by the user.

Hereinafter, with reference to FIG. 4, an exemplary operation of the electronic device displaying the at least one first stroke of the operation 310 will be described.

FIG. 4 illustrates an exemplary operation of an electronic device 101 for displaying a stroke 132 including a plurality of points connected to each other. The electronic device 101 of FIG. 1 and FIG. 2 and/or the processor 210 of FIG. 2 may perform the operation of the electronic device 101 described with reference to FIG. 4.

Referring to FIG. 4, an exemplary state of the electronic device 101 displaying a plurality of strokes 130 in response to an input received through an area 122 of a display 110 is illustrated. In a case that the input is detected through a stylus pen contacted on the display 110, the electronic device 101 may perform sampling with respect to a position of the stylus pen contacted on the display 110. Based on the sampling, the electronic device 101 may obtain one or more coordinate values indicating the position.

For example, while receiving an input to display the stroke 132 representing an alphabet "r," the electronic device 101 may detect or identify positions (e.g., a point p1 to a point p10) of the stylus pen at different timings, based on the sampling. For example, in a case that the stylus pen contacted at the point p1 is moved along the stroke 132, the electronic device 101 may detect the stroke 132 representing a path of the stylus pen contacted on the display 110 based on a connection of the point p1 to the point p10 identified based on the sampling.

In an embodiment, the electronic device 101 may store information corresponding to the stroke 132 in memory (e.g., the memory 215 of FIG. 2). The information corresponding to the stroke 132 may be used to visualize the stroke 132 within the display 110. The information corresponding to the stroke 132 may include coordinate values of the point p1 to the p10 identified based on the sampling, an order of the points, and/or timings of the points. The order may be represented by numerical values (e.g., index values) uniquely assigned to each of the points.

Referring to FIG. 4, in a state in which the stroke 132 represented by a connection of ten points (e.g., the point p1 to the point p1 p10) is displayed, the electronic device 101 may display the plurality of strokes 130 by connecting other points. The electronic device 101 may modify penmanship represented by the stroke 132 (e.g., penmanship of the alphabet "r") by changing or deleting a position of at least one among the ten points. For modifying the penmanship, the electronic device 101 may perform a two-step process including a preprocess operation to delete a noise segment. Based on deletion of the noise segment, at least one among the ten points included in the stroke 132 may be deleted.

The electronic device 101 may detect a noise segment such as a serif by using a plurality of points disposed on the plurality of strokes 130. Referring to FIG. 4, by using the ten points disposed on the stroke 132, the processor may extract or identify the noise segment within the stroke 132. The noise segment may include a portion of the stroke 132 in which an angle and/or a direction is abruptly modified. The electronic device 101 may detect an inflection point and/or a local extreme point among the points included in the stroke 132. Based on the inflection point and/or the local extreme point, the electronic device 101 may detect or delete the noise segment.

In an embodiment, an operation of the electronic device 101 to detect and/or delete the noise segment may be automatically performed based on a setting value associated with the plurality of strokes 130. For example, while a designated mode such as a penmanship correction mode (or a stroke correction mode) is activated, the electronic device 101 may perform an operation of detecting and/or deleting the noise segment from the plurality of strokes 130. The electronic device 101 may display, on the display 110, a visual object to activate and/or deactivate the designated mode. The designated mode may be activated or deactivated according to the setting value. For example, based on an input associated with a visual object 410, in a case that the electronic device 101 replaces the plurality of strokes 130 with a text including one or more characters (e.g., a text including characters represented by binary codes), the electronic device 101 may not modify the plurality of strokes 130 and/or may not delete the noise segment included in the plurality of strokes 130. In the example, the electronic device 101 may receive, through another visual object different from the visual object 410, an input indicating whether to execute a function to modify penmanship of the plurality of strokes 130. In response to an input associated with the another visual object, the electronic device 101 may execute the function to modify the penmanship of the plurality of strokes 130 or may activate the designated mode by changing the setting value.

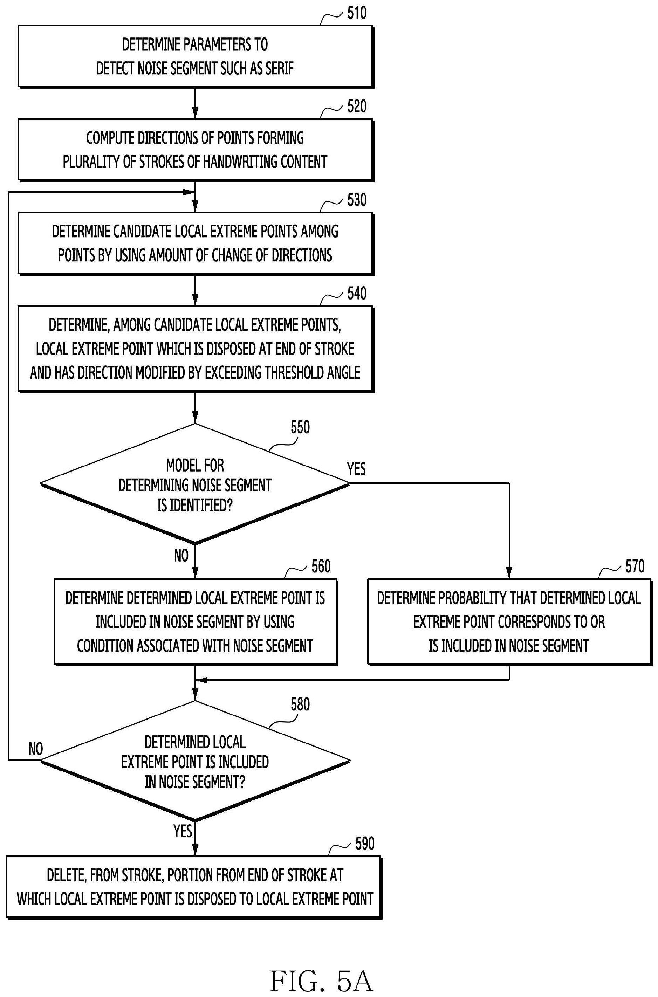

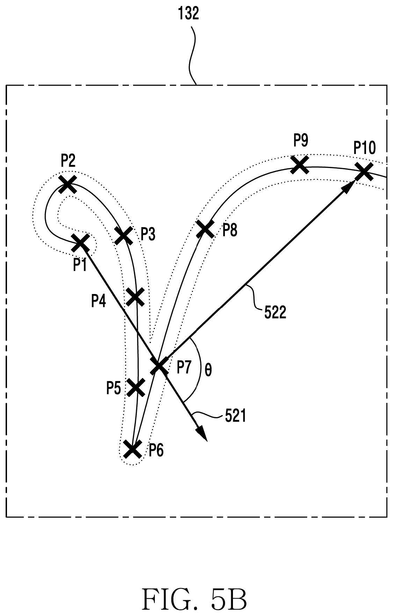

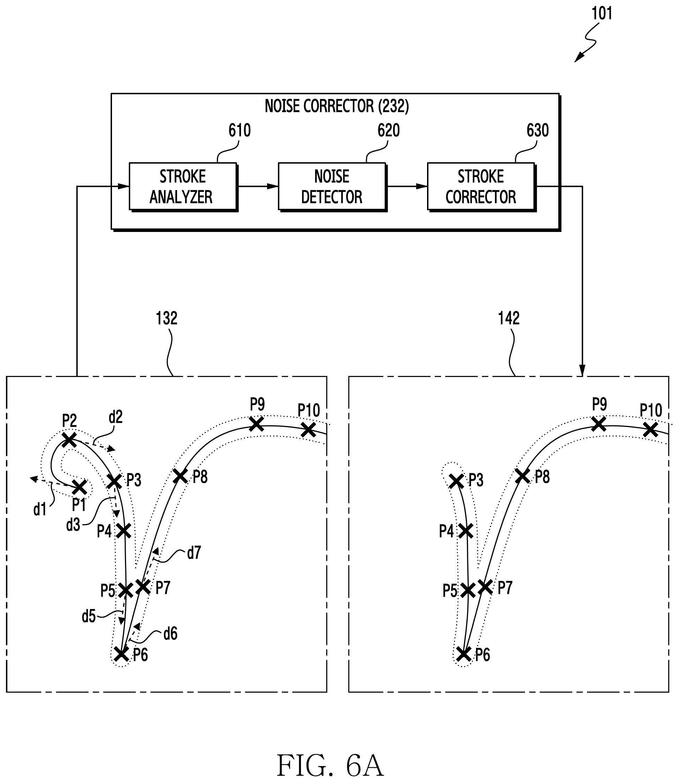

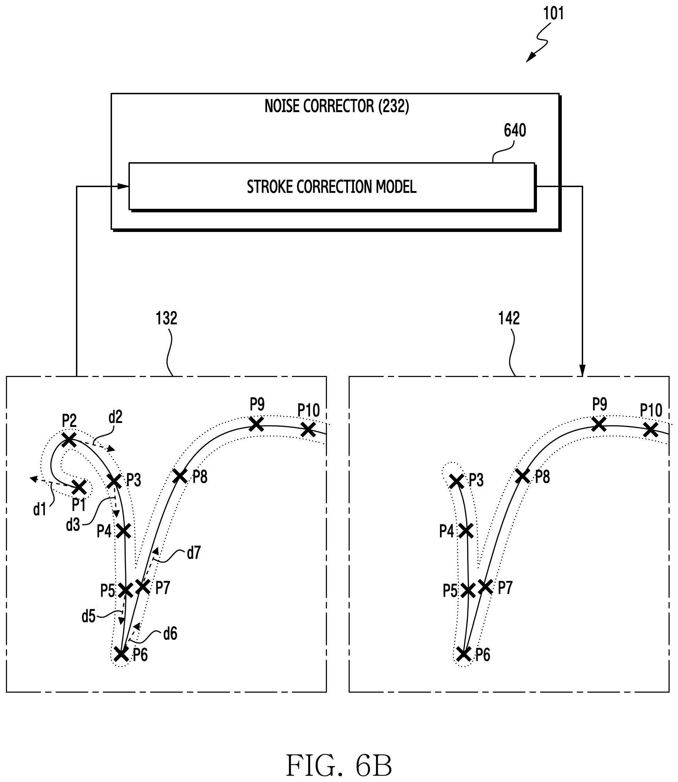

Hereinafter, an exemplary operation of the electronic device 101 performed to remove a noise segment will be described with reference to FIGS. 5A, 5B, 6A and/or 6B.

FIGS. 5A and 5B illustrate exemplary flowcharts for describing an operation of an electronic device according to an embodiment. The operation described with reference to FIGS. 5A and/or 5B may be performed by the electronic device 101 of FIGS. 1 and 2 and/or the processor 210 of FIG. 2.

Referring to FIG. 5A, in operation 510, according to an embodiment, a processor of the electronic device may determine parameters to detect a noise segment such as a serif. The operation 510 may be performed in a state in which a handwriting content including a plurality of strokes is received, as in exemplary states of FIGS. 1 to 4. Due to a characteristic of handwriting drawn in various sizes according to a case, the electronic device 101 may perform the operation 510 at a timing of detecting one or more strokes or at a timing of detecting a character (or a figure) represented by the one or more strokes.

In an embodiment, the parameters determined by the electronic device 101 by performing the operation 510 may include a reference length. The reference length may include a spacing (or a height) of a line of characters represented by strokes drawn in a specific direction (e.g., a horizontal direction or a vertical direction of the display 110 of FIG. 1 or another direction different from the direction). The parameters of the operation 510 may include a numerical value (e.g., an angle and/or elements of a unit vector) indicating a direction of the line. The reference length may include an average length (or a maximum length, a minimum length, and/or a median of lengths of the strokes) of the strokes. A value obtained by applying a designated ratio to the reference length may be determined as a threshold length. The threshold length may be included in the parameters of the operation 510 and may be used to distinguish the characters represented by the strokes.

Referring to FIG. 5A, in operation 520, according to an embodiment, the processor of the electronic device may compute directions of points forming a plurality of strokes of the handwriting content. The points of the operation 520 may correspond to coordinate values obtained by sampling positions of an external object contacted on the display while detecting the external object dragged to draw a specific stroke, such as the point p1 to the point p10 of FIG. 4. The points of the operation 520 may be sequentially connected to form a stroke.

A direction of the operation 520 may include directions of each of points included in a stroke. Referring to FIG. 5B, points (e.g., the point p1 to the point p10) included in a stroke 132 are exemplarily illustrated. In the exemplary stroke 132 of FIG. 5B, a direction of a specific point (e.g., a point p7) determined based on the operation 520 may be represented by an angle Θ (theta) between a first line 521 connecting a beginning point of the stroke 132 and the specific point and a second line 522 connecting the specific point and a terminal point. The angle Θ may be referred to as an angle and/or an amount of angle change of the point p7. For example, in a case that a stroke is drawn vertically in the specific direction, a direction of points included in the stroke may all be 0°. For example, in a case that a stroke is drawn in a shape of "U," a direction of points included in the stroke may increase up to 180°. An embodiment is not limited thereto, and, for example, the direction may include a direction of a line connecting a specific point and another point (e.g., a next point connected to the specific point along a moving direction of the stroke) connected to the specific point. In the example, the direction may correspond to a vector including a difference between a coordinate value of the specific point and a coordinate value of the another point as an element and/or an angle of the vector (e.g., azimuth angle). For example, the direction of the specific point may correspond to a tangent of a stroke determined on the specific point. The direction of the specific point may correspond to the direction of a line connecting two points adjacent to the specific point. For example, in the exemplary stroke 132 of FIG. 5B, a direction of the point p7 may be a direction of a tangent of the point p7, or a direction of a line connecting the points p6 and p8 adjacent to the point p7.

Referring to FIG. 5A, in operation 530, according to an embodiment, the processor of the electronic device may determine candidate local extreme points among points by using an amount of change of the directions of the operation 520. The amount of change may include a difference between angles of directions of each of the points and/or a difference between angles of each of the points. The processor may group two or more adjacent points among the points included in the specific stroke. The processor may determine any one point among the grouped points as a representative point of the group. Within the grouped points, an amount of change of a direction at the representative point may be maximum. The representative point may be referred to as a candidate local extreme point of the operation 530. In a case that a plurality of points included in the stroke are grouped into different groups, the processor may extract candidate local extreme points of each of the groups. The processor may determine whether each of the groups corresponds to the noise segment by using the candidate local extreme points.

Referring to FIG. 5A, in operation 540, according to an embodiment, the processor of the electronic device may determine, among the candidate local extreme points of the operation 530, a local extreme point which is disposed at an end of the stroke and has an angle modified by exceeding a threshold angle. The noise segment such as the serif may occur at both ends of the stroke, as exemplarily illustrated with reference to FIG. 1 and/or FIG. 4. In consideration of a position on the stroke at which the noise segment frequently exists, the processor may extract, among groups of the points, groups disposed at both ends of the stroke. For example, among the groups of the points, groups spaced apart from both ends of the stroke may not be determined as not corresponding to the noise segment. By using an amount of change of a direction at a candidate local extreme point of the extracted groups, the processor may determine the candidate local extreme point as a local extreme point. With respect to the local extreme point determined based on the operation 540, the processor may additionally perform an operation of determining whether the group of points including the local extreme point corresponds to the noise segment. For example, in an embodiment, in a case that a candidate local extreme point of a group disposed at an end of the stroke has a direction modified by exceeding the threshold angle, the processor may additionally perform an operation of determining whether the group of points including the candidate local extreme point corresponds to the noise segment.

Referring to FIG. 5A, in operation 550, according to an embodiment, the processor of the electronic device may identify a model for determining the noise segment. The model of the operation 550 may be a model provided for driving the noise corrector 232 of FIG. 2, and may be trained to provide, as an output, information indicating whether the group and/or the local extreme point corresponds to the noise segment In case that the local extreme point determined based on the operation 540 and/or coordinate values of points within a group corresponding to the local extreme point are received as an input. In a case that the model is not included in the electronic device or the model is not identified (550-NO), the processor may perform operation 560. The operation 560 may be associated with a rule for detecting the noise segment. In a case that the model is identified (550-YES), the processor may perform operation 570. The operation 570 may be performed by using the model to detect the noise segment.

Referring to FIG. 5A, in the operation 560, according to an embodiment, the processor of the electronic device may determine whether the local extreme point determined based on the operation 540 is included in the noise segment by using a condition (or a rule) associated with the noise segment. The condition may be set to determine whether the local extreme point and/or points included in a group corresponding to the local extreme point correspond to a boundary point of the noise segment. The condition may be associated with an amount of change of a direction at the local extreme point. For example, in a case that the direction at the local extreme point is modified by exceeding the threshold angle, the processor may determine that the local extreme point and/or the group corresponding to the local extreme point corresponds to the noise segment.

In an embodiment, the condition of the operation 560 may be associated with an intensity (e.g., pressure of the stylus pen) associated with the local extreme point and/or a thickness of a portion of the stroke corresponding to the local extreme point. For example, as the stylus pen is contacted with weaker pressure, a probability that the stylus pen slips may increase. In a case that the intensity associated with the local extreme point is less than a designated intensity, the processor may determine that the local extreme point and/or the group corresponding to the local extreme point corresponds to the noise segment. For example, the processor may determine whether the local extreme point and/or the group corresponds to the noise segment based on distances between points of the group corresponding to the local extreme point. The processor may determine whether the local extreme point and/or the group corresponds to the noise segment based on an aspect ratio and/or a shape of points included in the group corresponding to the local extreme point.

In an embodiment, the condition of the operation 560 used to determine the noise segment may be set based on thresholds of an angle, an intensity, a distance, and/or an aspect ratio. The thresholds may be adaptively adjusted according to the parameters determined based on the operation 510. For example, a threshold angle compared with the amount of change of the direction of the local extreme point may be modified according to a length of the stroke. For example, a threshold distance compared with a distance between local extreme points may be increased or decreased according to the length of the stroke. In the example, the threshold distance may decrease as the length of the stroke becomes shorter. By using the operation 560 based on the rule, the processor may determine whether a group disposed at an end of the stroke and/or at least one point (e.g., a point including the local extreme point) included in the group corresponds to the noise segment.

Referring to FIG. 5A, in operation 570, according to an embodiment, the processor of the electronic device may determine a probability that the determined local extreme point corresponds to or is included in the noise segment. The probability may be obtained by using a model trained to compute and/or determine a probability that a point such as the local extreme point matches the boundary point of the noise segment. The model may receive, as an input, a coordinate value of the point (e.g., the local extreme point or at least one point included in the stroke). The embodiment is not limited thereto, and the model may receive, as an input, at least one among a direction of the point, distances between points, angles of the points, densities of the points, and/or the parameters of the operation 510.

Referring to FIG. 5A, in operation 580, according to an embodiment, the processor of the electronic device may determine whether the determined local extreme point is included in the noise segment. Based on a result of performing the operation 560 and/or the operation 570, the processor may determine whether the local extreme point of the operation 540 and/or the group including the local extreme point corresponds to the noise segment. For example, in a case that the condition of the operation 560 is not satisfied, or the probability of the operation 570 is less than a designated threshold, the local extreme point may not be included in the noise segment. For example, in a case that the condition of the operation 560 is satisfied, or the probability of the operation 570 is equal to or greater than the designated threshold, the local extreme point may be determined to be included in the noise segment. In a case that a local extreme point not included in the noise segment is identified (580-NO), the processor may perform the operation 530 with respect to a group different from the group including the local extreme point of the operation 520. In a case that a local extreme point included in the noise segment is identified (580-YES), the processor may perform operation 590.

Referring to FIG. 5A, in the operation 590, according to an embodiment, the processor of the electronic device may delete, from the stroke, a portion from an end of the stroke at which the local extreme point is disposed to the local extreme point. In a case that the local extreme point is determined to correspond to the noise segment, the processor may delete, from the stroke, a segment (e.g., the noise segment) of the stroke corresponding to the local extreme point and the group of the points including the local extreme point. Since the local extreme point is included in the group of points disposed at the end of the stroke, a length of the stroke may be reduced based on the operation 590. Since the end of the stroke is deleted, the length of the stroke may be reduced, but the stroke may not be cut.

As described above, according to an embodiment, the electronic device may identify at least one noise segment from a plurality of strokes included in a handwriting content. The electronic device identifying the at least one noise segment may delete or reduce the at least one noise segment from the plurality of strokes. Since the noise segment is deleted, the electronic device may improve visibility of one or more characters represented by the plurality of strokes. Hereinafter, with reference to FIG. 6A and/or FIG. 6B, one or more programs included in the electronic device to perform the operation of FIG. 5A will be described.

FIGS. 6A and 6B illustrate an exemplary operation of an electronic device 101 associated with a noise segment (e.g., a serif) included in a stroke 132. The electronic device 101 of FIGS. 1 and 2 and/or the processor 210 of FIG. 2 may perform the operation of the electronic device 101 described with reference to FIGS. 6A and/or 6B. The operation of the electronic device 101 described with reference to FIGS. 6A and/or 6B may be associated with at least one (e.g., the operation 320 of FIG. 3) of the operations of FIGS. 3 and 5A.

Referring to FIG. 6A, sub-routines included in a noise corrector 232 installed in the electronic device 101 are illustrated based on different blocks. The sub-routines included in the noise corrector 232 may be divided into a stroke analyzer 610, a noise detector 620, and a stroke corrector 630 according to a function. Based on execution of the stroke analyzer 610, the electronic device 101 may obtain information associated with the stroke 132 included in a handwriting content. The information may include a direction (e.g., a direction d1 to a direction d10), an angle, a distance, and/or an intensity of points (e.g., a point p1 to a point p10) included in the stroke 132.

In an embodiment, by executing the stroke analyzer 610, the electronic device 101 may perform the operations 510 and 520 of FIG. 5A. For example, in a case that the point p1 of the stroke 132 is a beginning point and the point p10 is a terminal point, the electronic device 101 may determine an angle of a point p2 as an angle between a first line connecting the point p1 and the point p2 and a second line connecting the point p2 and the point p10. In a case that the angle of the point p2 is different from at least one among angles of other points (e.g., the point p1 and/or a point p3) connected to the point p2 by greater than or equal to a threshold angle, the electronic device 101 may determine the point p2 as a local extreme point of a group (e.g., a group including the point p1 corresponding to an end of the stroke 132) including the point p2 and the other points.

In an embodiment, the electronic device 101 may detect or extract at least one point corresponding to the noise segment among a plurality of points included in the stroke 132 by executing the noise detector 620. The information obtained based on the stroke analyzer 610 may be used to detect the at least one point corresponding to the noise segment. For example, the processor may determine, by using at least one among an angle or a distance between a first point among the plurality of points corresponding to an end of the stroke 132 and a second point among the plurality of points, whether a segment of the stroke distinguished by the first point and the second point is corresponding to the noise segment. By executing the noise detector 620, the electronic device 101 may perform at least one among the operations 530, 540, 550, 560, and 570 of FIG. 5A.

For example, with respect to a group of the point p1, the point p2, and the point p3 including the point p2 as the local extreme point, the electronic device 101 may determine whether the group and/or the point p2 is associated with the noise segment by executing the noise detector 620. In a case that an amount of change of an angle at the point p2 exceeds a threshold, the electronic device 101 may determine the group corresponding to the point p2 as the noise segment and/or the serif.

In an embodiment, by executing the stroke corrector 630, the electronic device 101 may perform the operation 590 of FIG. 5A. For example, in a case that the group corresponding to the point p2 is determined as the noise segment and/or the serif, the electronic device 101 may delete points included in the group including the point p2. Referring to FIG. 6A, a stroke 142 after the point p1 to the point p3 are deleted may not include the noise segment (e.g., the serif) formed around the point p2.

As described above with reference to FIG. 6A, the electronic device 101 may determine a segment of the stroke 132 including the end of the stroke 132 as the noise segment based on whether the segment of the stroke 132 corresponds to the serif. The segment determined as the noise segment may be deleted from the stroke 132 or divided. Since the noise segment in the stroke 132 is deleted based on the stroke corrector 630, the electronic device 101 may delete a factor that interferes with modification of penmanship and/or recognition of a character (e.g., "r") corresponding to the stroke 132. Because the noise segment is deleted from the stroke 132, the electronic device 101 may modify a state of the stroke 132 to a state suitable for the modification of the penmanship.

The noise detector 620 of FIG. 6A may include a sub-routine to check the condition of the operation 560 of FIG. 5A. An embodiment is not limited thereto, and the noise detector 620 may include a model to perform the operation 570 of FIG. 5A. Referring to FIG. 6B, an embodiment of the electronic device 101 executing the noise corrector 232 by using a model is illustrated. The noise corrector 232 installed in the electronic device 101 may include a stroke correction model 640. By using the stroke correction model 640, the electronic device 101 may directly input information associated with at least one among points included in the stroke 132.

In an embodiment, by using the stroke correction model 640 to which the information is inputted, the electronic device 101 may detect the noise segment (e.g., the serif) within the stroke 132. For example, from the stroke correction model 640, the electronic device 101 may obtain probabilities that each of the points included in the stroke 132 corresponds to the noise segment. By deleting points (e.g., the point p1 and/or the point p2) having probabilities exceeding a designated threshold, the electronic device 101 may generate or obtain the stroke 142 of which the noise segment is deleted. Although an operation of the electronic device 101 deleting a detected noise segment and/or points included in the noise segment (e.g., in an exemplary case of FIG. 6B, the point p1 to the point p2) has been described, the embodiment is not limited thereto. For example, from the stroke correction model 640, the electronic device 101 may obtain coordinate values of points (e.g., the point p3 to the point p10) included in the stroke 142. Based on the obtained coordinate values, the electronic device 101 may identify the stroke 142 of which the noise segment is deleted.

In an embodiment, the stroke correction model 640 may be trained based on a pair of input data (e.g., the stroke 132) and output data (e.g., the stroke 142) of the noise corrector 232 of FIG. 6A. The pair may be referred to as ground truth associated with the stroke correction model 640.

As described above, the electronic device 101 may delete or reduce the serif and/or the noise segment included in the stroke 132 by using a rule and/or a model (e.g., the stroke correction model 640). With respect to a handwriting content including the stroke 142 of which the noise segment is deleted, the electronic device 101 may perform an operation to modify penmanship. Hereinafter, with reference to FIGS. 7 to 12, an exemplary operation of the electronic device 101 performed to modify the penmanship will be described.

FIG. 7 illustrates an exemplary structure of a penmanship modification model 236 included in an electronic device 101 according to an embodiment. The electronic device 101 of FIGS. 1 and 2 and/or the processor 210 of FIG. 2 may perform an operation of the electronic device 101 described with reference to FIG. 7. The operation of the electronic device 101 described with reference to FIG. 7 may be associated with at least one (e.g., the operation 330 of FIG. 3) of the operations of FIGS. 3 and/or 5A.

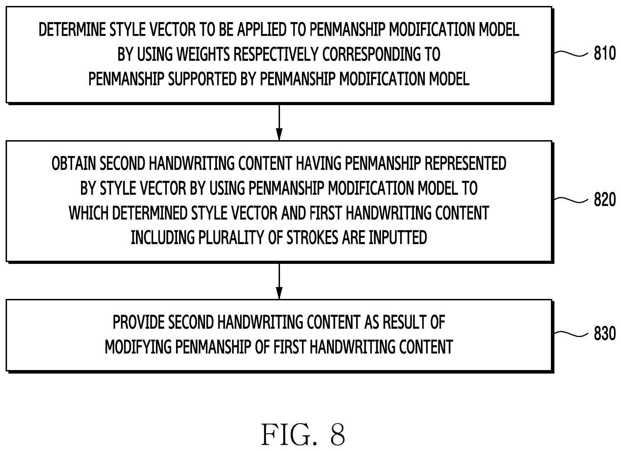

In an embodiment, the electronic device 101 may input strokes 140 included in a handwriting content into the penmanship modification model 236. By using the penmanship modification model 236 to which the strokes 140 are inputted, the electronic device 101 may obtain or generate strokes 150 having a second penmanship different from a first penmanship of the strokes 140. The second penmanship may be selected from one or more designated penmanship supported by the penmanship modification model 236 or may be a combination of penmanship supported by the penmanship modification model 236. Penmanship of the strokes 150 may be set to improve at least one among visibility, readability, and/or aesthetics of one or more characters represented by the strokes 140. A user of the electronic device 101 may select one penmanship among a plurality of penmanship supported by the penmanship modification model 236 or may determine a ratio of the plurality of penmanship, as described with reference to FIGS. 8 to 12. The penmanship supported by the penmanship modification model 236 may include penmanship of another user (e.g., an expert and/or an artist) different from the user of the electronic device 101. The penmanship supported by the penmanship modification model 236 may include penmanship of the user of the electronic device 101 represented by the strokes 140.

Referring to FIG. 7, operations indicated by the penmanship modification model 236 are illustrated by being divided into different blocks. The penmanship modification model 236 may include an encoder 710 including a sequential connection of a plurality of layers having progressively decreasing dimensions and a decoder 730 including a sequential connection of a plurality of layers having progressively increasing dimensions. The encoder 710 and the decoder 730 may have a structure of a neural network referred to as a transformer.

By using the penmanship modification model 236 trained for modification of penmanship, the electronic device 101 may input information associated with strokes 140 of which a noise segment is deleted. Training of the penmanship modification model 236 may be performed by a server connected to the electronic device 101, as described above with reference to FIG. 2, or may be directly performed by the electronic device 101. The information may be inputted to a specific layer (e.g., a layer having the largest dimension among layers included in the encoder 710) of the encoder 710 of the penmanship modification model 236. The information may include coordinate values of points included in the strokes 140 and/or data (e.g., identifiers respectively assigned to the strokes 140 and/or the points) to distinguish each of the strokes 140.

Referring to FIG. 7, by using the encoder 710 to which the information is inputted, the electronic device 101 may obtain or generate a latent vector 720. The latent vector 720 may include numerical values associated with characteristics of information (e.g., the strokes 140 of which a noise segment such as a serif is deleted) inputted to the encoder 710 as implicit information, based on a reduced dimension. An entire set of latent vectors that may be outputted by the encoder 710 may be referred to as a latent space. The latent vector 720 may be referred to as information inputted to the encoder 710 and/or feature information of the strokes 140 corresponding to the information. By using the decoder 730 of the penmanship modification model 236, the electronic device 101 may perform computations to generate or obtain the strokes 150 from the latent vector 720. For example, the decoder 730 may include a neural network trained to generate the strokes 150 from the latent vector 720.

In an embodiment, the penmanship modification model 236 may include a style vector generator 740 connected to at least one layer in the encoder 710. The style vector generator 740 may include a model in which a plurality of layers are combined. For example, the style vector generator 740 may include a styling layer 741 connected to the encoder 710, a preference layer 743 connected to the styling layer 741 to obtain a first style vector yi generated from the styling layer 741, and a normalization layer 744 connected to the preference layer 743 to obtain a preference vector ri generated from the preference layer 743. A second style vector si 745 generated from the normalization layer 744 may have a designated length. By combining the second style vector 745 with the latent vector 720 provided to the decoder 730, the electronic device 101 may generate or display the strokes 150 having penmanship corresponding to the second style vector 745.

In an embodiment, the penmanship modification model 236 may be trained based on handwriting contents (e.g., handwriting) to which a plurality of penmanship are applied. By using the penmanship modification model 236, the electronic device 101 may obtain the strokes 150 in which a shape of at least one among the strokes 140 is modified. Shapes of the strokes 140 may be modified to have penmanship associated with the second style vector 745 while maintaining visibility of one or more characters corresponding to the strokes 140.

Referring to FIG. 7, based on a connection between the encoder 710 and the styling layer 741, the latent vector 720 determined by the encoder 710 and/or information included in the encoder 710 may be provided to the styling layer 741. The styling layer 741 may include one or more hidden layers in addition to a layer connected to the encoder 710. By using the styling layer 741, the electronic device 101 may generate or compute the first style vector yi to be used to generate the second style vector 745. In the preference layer 743, the first style vector yi and a preference vector pi generated by a preference vector generator 742 may be combined with each other. The preference vector generator 742 may be a sub-routine of the penmanship modification model 236 configured to generate and/or output the preference vector pi based on a preference (or a setting value inputted by the user) of the user associated with penmanship. By using the preference vector generator 742, the electronic device 101 may input preference information (e.g., the preference vector pi) indicating at least one penmanship to be used for modification of a shape of the strokes 140 into the penmanship modification model 236.

In the preference layer 743, the first style vector yi and the preference vector pi may be combined based on a multiplication operation. For example, based on point-wise multiplication, the electronic device 101 may generate or obtain the preference vector ri to be provided to the normalization layer 744 (e.g., ri = yi × pi). The electronic device 101 may generate or obtain the second style vector 745 by performing normalization on the preference vector ri inputted to the normalization layer 744. The normalization may be performed based on an algorithm for adjusting a sum of element values of the second style vector 745 to 1, such as softmax.

In an embodiment, the electronic device 101 may combine preference information such as the second style vector 745 with the latent vector 720 which is obtained from the encoder 710 and to be inputted to the decoder 730. The second style vector 745 and the latent vector 720 may be combined in various ways. For example, the electronic device 101 may combine the second style vector 745 with the latent vector 720 based on the above-described point-wise multiplication. For example, the electronic device 101 may combine the second style vector 745 with the latent vector 720 based on an addition operation. For example, the electronic device 101 may obtain or generate a combination of the latent vector 720 and the second style vector 745 based on concatenation of the latent vector 720 and the second style vector 745. The combination based on the concatenation may have a form of a vector in which n elements of the second style vector 745 are disposed after m elements of the latent vector 720.

According to an embodiment, the electronic device 101 may generate or obtain the strokes 150 of which penmanship is modified by using the decoder 730 to which the combination of the latent vector 720 and the second style vector 745 is inputted within the penmanship modification model 236. The strokes 150 may have penmanship represented by the second style vector 745 and may display one or more characters represented by the strokes 140 indicated by the latent vector 720. By modifying only the penmanship included in the strokes 140, the electronic device 101 may improve visibility, readability, and/or aesthetics of the strokes 140 without distorting information included in the strokes 140.

In an embodiment, the user of the electronic device 101 may modify the penmanship of the strokes 140 by using preference information of the preference vector generator 742. For example, the user may select one among designated penmanship supported by the penmanship modification model 236 or may create new penmanship to be applied to the strokes 140 by combining the designated penmanship, or may create new penmanship to be applied to the strokes 140 by combining the penmanship of the user indicated by the strokes 140 and the designated penmanship. The electronic device 101 may generate or display the strokes 150 of which the noise segment is minimized by inputting, to the penmanship modification model 236, the strokes 140 of which the noise segment such as the serif is deleted, instead of strokes (e.g., the strokes 130 of FIG. 1) directly received from the user. For example, the electronic device 101 may provide a handwriting content of higher quality to the user.

Hereinafter, with reference to FIGS. 8 to 12, an exemplary operation of the electronic device 101 based on driving of the penmanship modification model 236 will be described.

FIG. 8 illustrates an exemplary flowchart for describing an operation of an electronic device associated with a penmanship modification model (e.g., the penmanship modification model 236 of FIG. 2 and/or FIG. 7). The operation described with reference to FIG. 8 may be performed by the electronic device 101 of FIGS. 1 and 2 and/or the processor 210 of FIG. 2. The operation of FIG. 8 may be associated with at least one of the operations described with reference to FIGS. 3 and/or 5A.

Referring to FIG. 8, in operation 810, according to an embodiment, a processor of the electronic device may determine a style vector to be applied to the penmanship modification model by using weights respectively corresponding to penmanship supported by the penmanship modification model. The style vector of the operation 810 may include the second style vector 745 of FIG. 7. The weights of the operation 810 may be individually set for each of penmanship in order to apply only one among the penmanship supported by the penmanship modification model to a handwriting content or to apply a combination of the penmanship. The weights of the operation 810 may be referred to as preference information used to generate the preference vector pi of the preference vector generator 742 of FIG. 7.

Referring to FIG. 8, in operation 820, according to an embodiment, the processor of the electronic device may obtain a second handwriting content having penmanship represented by the style vector of the operation 810 by using the penmanship modification model to which the style vector determined based on the operation 810 and a first handwriting content including a plurality of strokes are inputted. The penmanship modification model of the operation 820 may include the penmanship modification model 236 of FIG. 2 and/or FIG. 7. The first handwriting content of the operation 820 may include strokes of which a noise segment is deleted, such as the strokes 140 of FIG. 7. The second handwriting content of the operation 820 may include the strokes 150 of FIG. 7.

Referring to FIG. 8, in operation 830, according to an embodiment, the processor of the electronic device may provide the second handwriting content as a result of modifying penmanship of the first handwriting content. For example, the processor may display at least a portion of the second handwriting content within a display (e.g., the display 110 of FIG. 1 and/or FIG. 2). In a case that a user sets a weight for specific penmanship among the penmanship of the operation 810 to a maximum value (e.g., 100%) and sets weights of other penmanship to a minimum value (e.g., 0%), the second handwriting content provided based on the operation 830 may include a plurality of strokes visualizing one or more characters represented by the first handwriting content in the specific penmanship. In the example, the preference vector pi generated by the preference vector generator 742 of FIG. 7 may include the exemplified weights. An embodiment is not limited thereto, and the processor may determine the preference vector pi by combining style vectors indicating each of designated penmanship supported by the penmanship modification model based on the exemplified weights.

For example, in a case that the user sets at least two weights among weights corresponding to the penmanship supported by the penmanship modification model to values different from the minimum value, the second handwriting content provided based on the operation 830 may include one or more characters represented based on a combination of penmanship corresponding to the at least two weights.

For example, in a case that the user sets all of weights corresponding to the penmanship supported by the penmanship modification model to the minimum value (e.g., 0%), the second handwriting content provided based on the operation 830 may have the penmanship of the first handwriting content of the operation 820. For example, in a case that all of the weights are set to the minimum value, the processor may determine whether to maintain penmanship of the one or more characters represented by the first handwriting content.

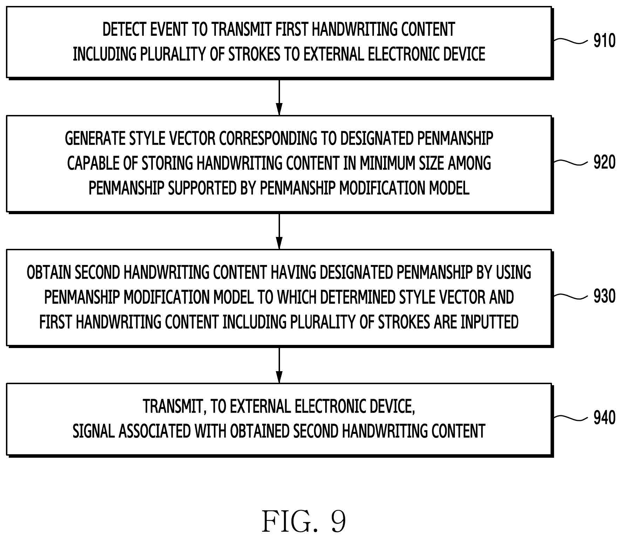

An operation of providing the second handwriting content of the operation 830 may include not only an operation of displaying the second handwriting content within the display, but also an operation of transmitting the second handwriting content to an external electronic device different from the electronic device through a network. Hereinafter, with reference to FIG. 9, an operation of the electronic device to modify a handwriting content by using penmanship suitable for the network will be described.

FIG. 9 illustrates an exemplary flowchart for describing an operation of an electronic device that optimizes a handwriting content to be transmitted to an external electronic device using a penmanship modification model (e.g., the penmanship modification model 236 of FIG. 2 and/or FIG. 7). The operation described with reference to FIG. 9 may be performed by the electronic device 101 of FIGS. 1 and 2 and/or the processor 210 of FIG. 2. The operation of FIG. 9 may be associated with at least one of the operations described with reference to FIGS. 3, 5A and/or 8.

Referring to FIG. 9, in operation 910, according to an embodiment, a processor of the electronic device may detect an event to transmit a first handwriting content including a plurality of strokes to the external electronic device. The first handwriting content may include a plurality of strokes directly obtained from a user or may include a plurality of strokes of which a noise segment such as a serif is deleted. The event of the operation 910 may be detected in response to an input for sharing and/or storing the first handwriting content.

Referring to FIG. 9, in operation 920, according to an embodiment, the processor of the electronic device may generate a style vector corresponding to designated penmanship capable of storing a handwriting content in a minimum size among penmanship supported by the penmanship modification model. The designated penmanship of the operation 920 may be designed to represent at least one character by using a relatively small number of points. For example, as a character represented by the penmanship includes more straight strokes, since the number of points required to represent a straight stroke (e.g., at least two points) is smaller than the number of points required to represent a curved stroke, the number of points to be included in the handwriting content based on the penmanship may be reduced. For example, the number of points to be stored to represent strokes included in the handwriting content may be reduced. An embodiment is not limited thereto, and the designated penmanship of the operation 920 may be designed to efficiently compress (or encode) and/or transmit information included in the handwriting content.

The style vector of the operation 920 may be generated to select the designated penmanship of the operation 920 among the penmanship supported by the penmanship modification model. A weight corresponding to the designated penmanship of the operation 920 may be set to a maximum value, and a weight of another penmanship different from the designated penmanship may be set to a minimum value. Based on the weights, the electronic device 101 may obtain or compute the preference vector pi and/or the second style vector 745 of FIG. 7.

Referring to FIG. 9, in operation 930, according to an embodiment, the processor of the electronic device may obtain a second handwriting content having the designated penmanship by using the penmanship modification model to which the style vector determined based on the operation 920 and the first handwriting content including the plurality of strokes are inputted. The processor may perform the operation 930 of FIG. 9 similarly to the operation 820 of FIG. 8.

Referring to FIG. 9, in operation 940, according to an embodiment, the processor of the electronic device may transmit, to the external electronic device, a signal associated with the obtained second handwriting content. The operation 940 of FIG. 9 may be associated with the operation 830 of FIG. 8. The processor may transmit, to the external electronic device, information (e.g., coordinate values of points disposed on one or more strokes included in the second handwriting content) to display the second handwriting content. Since the second handwriting content includes one or more characters (e.g., the one or more characters represented by the first handwriting content) represented according to the designated penmanship of the operation 920, the second handwriting content may represent the one or more characters with a smaller capacity than the first handwriting content.

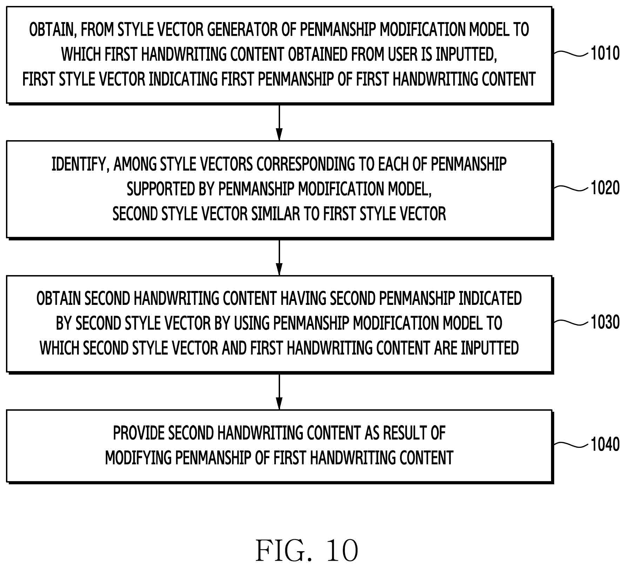

FIG. 10 illustrates an exemplary flowchart for describing an operation of an electronic device associated with a penmanship modification model (e.g., the penmanship modification model 236 of FIG. 2 and/or FIG. 7). The operation described with reference to FIG. 10 may be performed by the electronic device 101 of FIGS. 1 and 2 and/or the processor 210 of FIG. 2. The operation of FIG. 10 may be associated with at least one of the operations described with reference to FIGS. 3, 5A, 8 and/or 9.

Referring to FIG. 10, in operation 1010, according to an embodiment, a processor of the electronic device may obtain, from a style vector generator of the penmanship modification model to which a first handwriting content obtained from a user is inputted, a first style vector indicating a first penmanship of the first handwriting content. The first handwriting content of the operation 1010 may include a plurality of strokes of which a noise segment such as a serif is deleted, such as the strokes 140 of FIG. 7. The style vector generator of the operation 1010 may include the style vector generator 740 of FIG. 7. In an embodiment, the processor may obtain the first style vector of the operation 1010 from a styling layer (e.g., the styling layer 741 of FIG. 7) connected to an encoder (e.g., the encoder 710 of FIG. 7) of the penmanship modification model to which the plurality of strokes of the first handwriting content is inputted. The first style vector of the operation 1010 may include a second style vector 745 outputted from the style vector generator 740 while the plurality of strokes of the first handwriting content is inputted to the penmanship modification model and a preference vector pi (e.g., a vector in which all elements are set to 1) indicating that no vector is selected by the preference vector generator 742 is generated.

Referring to FIG. 10, in operation 1020, according to an embodiment, the processor of the electronic device may identify, among style vectors corresponding to each of penmanship supported by the penmanship modification model, a second style vector similar to the first style vector of the operation 1010. The processor may compute similarities of the first style vector with respect to the style vectors corresponding to each of the penmanship supported by the penmanship modification model by using an algorithm for computing a distance between vectors, such as an Euclidean distance. The processor may determine, among the style vectors corresponding to each of the penmanship, a style vector corresponding to a minimum similarity as the second style vector of the operation 1020. For example, the second style vector of the operation 1020 may be mapped to penmanship most similar to a first penmanship of the first handwriting content among the penmanship supported by the penmanship modification model.

Referring to FIG. 10, in operation 1030, according to an embodiment, the processor of the electronic device may obtain a second handwriting content having a second penmanship indicated by the second style vector by using the penmanship modification model to which the second style vector and the first handwriting content are inputted. For example, the processor may combine the second style vector of the operation 1030 with the latent vector 720 of FIG. 7. The processor may obtain the second handwriting content by inputting, to a decoder (e.g., the decoder 730 of FIG. 7) of the penmanship modification model, the latent vector combined with the second style vector.

Referring to FIG. 10, in operation 1040, according to an embodiment, the processor of the electronic device may provide the second handwriting content as a result of modifying penmanship of the first handwriting content. The operation 1040 of FIG. 10 may be performed similarly to the operation 830 of FIG. 8. For example, the processor may provide the second handwriting content having the second penmanship similar to the first penmanship (e.g., penmanship of the user who inputs the first handwriting content) of the first handwriting content among the penmanship supported by the penmanship modification model.

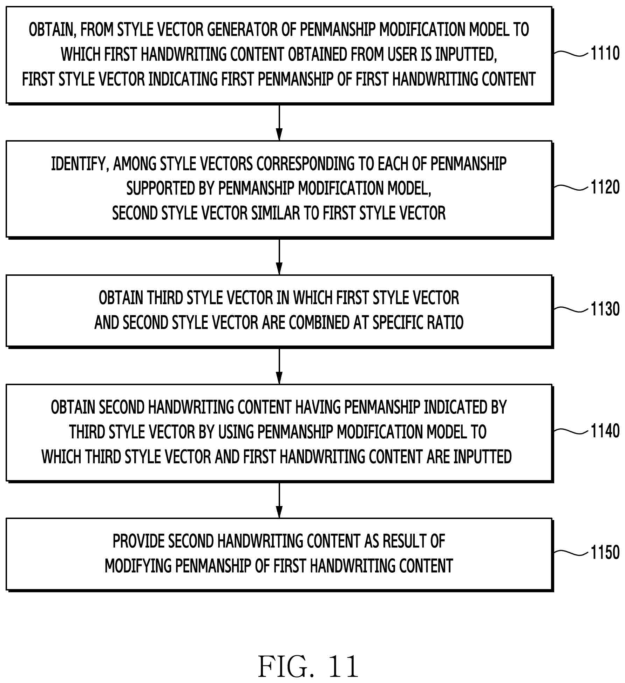

FIG. 11 illustrates an exemplary flowchart for describing an operation of an electronic device associated with a penmanship modification model (e.g., the penmanship modification model 236 of FIG. 2 and/or FIG. 7). The operation described with reference to FIG. 11 may be performed by the electronic device 101 of FIGS. 1 and 2 and/or the processor 210 of FIG. 2. The operation of FIG. 11 may be associated with at least one of the operations described with reference to FIGS. 3, 5A, and 8 to 10.

Referring to FIG. 11, in operation 1110, according to an embodiment, a processor of the electronic device may obtain, from a style vector generator of the penmanship modification model to which a first handwriting content obtained from a user is inputted, a first style vector indicating a first penmanship of the first handwriting content. The operation 1110 of FIG. 11 may be performed similarly to the operation 1010 of FIG. 10.

Referring to FIG. 11, in operation 1120, according to an embodiment, the processor of the electronic device may identify, among style vectors corresponding to each of penmanship supported by the penmanship modification model, a second style vector similar to the first style vector. The operation 1120 of FIG. 11 may be performed similarly to the operation 1020 of FIG. 10.

Referring to FIG. 11, in operation 1130, according to an embodiment, the processor of the electronic device may obtain a third style vector in which the first style vector and the second style vector are combined at a specific ratio. The third style vector may correspond to new penmanship in which the first penmanship of the operation 1110 and penmanship corresponding to the second style vector are combined. The ratio of the operation 1130 may mean a ratio between weights applied to the first style vector and the second style vector, respectively. For example, elements of the third style vector of the operation 1130 may be a sum (e.g., a weighted sum) of elements of the first style vector and elements of the second style vector to which each of the weights is applied. The ratio of the operation 1130 may be determined by using a numerical value adjustable by a user input.

Referring to FIG. 11, in operation 1140, according to an embodiment, the processor of the electronic device may obtain a second handwriting content having penmanship indicated by the third style vector by using the penmanship modification model to which the third style vector and the first handwriting content are inputted. The operation 1140 of FIG. 11 may be performed similarly to the operation 1030 of FIG. 10. The processor may input, to a decoder of the penmanship modification model, a combination of a latent vector obtained from an encoder to which the first handwriting content is inputted and the third style vector of the operation 1130. By using the decoder to which the combination is inputted, the processor may obtain the second handwriting content.

Referring to FIG. 11, in operation 1150, according to an embodiment, the processor of the electronic device may provide the second handwriting content as a result of modifying penmanship of the first handwriting content. The operation 1150 of FIG. 11 may be performed similarly to the operation 1040 of FIG. 10. By using the third style vector, the processor may provide or display the second handwriting content having new penmanship in which the first penmanship (e.g., penmanship of the user who inputs the first handwriting content) of the first handwriting content and the second penmanship similar to the first penmanship among the penmanship supported by the penmanship modification model are combined.

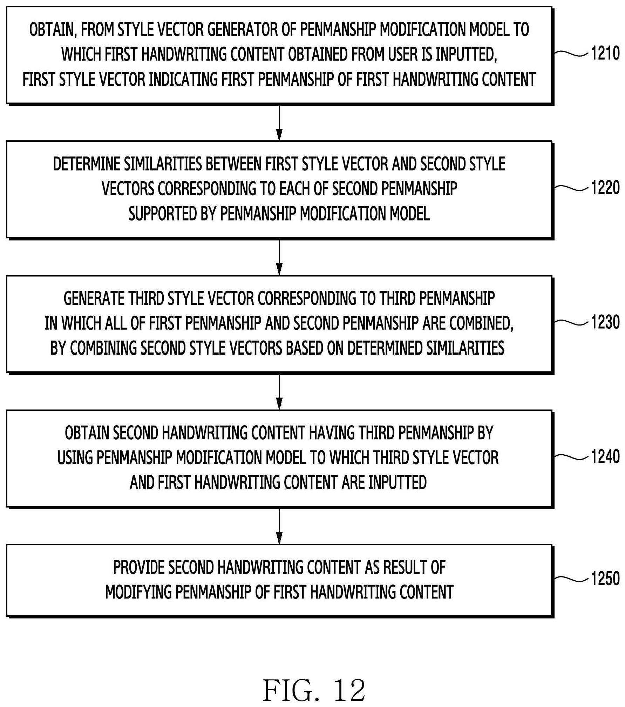

FIG. 12 illustrates an exemplary flowchart for describing an operation of an electronic device associated with a penmanship modification model (e.g., the penmanship modification model 236 of FIG. 2 and/or FIG. 7). The operation described with reference to FIG. 12 may be performed by the electronic device 101 of FIGS. 1 and 2 and/or the processor 210 of FIG. 2. The operation of FIG. 12 may be associated with at least one of the operations described with reference to FIGS. 3, 5A, and 8 to 11.

Referring to FIG. 12, in operation 1210, according to an embodiment, a processor of the electronic device may obtain, from a style vector generator of the penmanship modification model to which a first handwriting content obtained from a user is inputted, a first style vector indicating a first penmanship of the first handwriting content. The operation 1210 of FIG. 12 may be performed similarly to the operation 1010 of FIG. 10 and/or the operation 1110 of FIG. 11.

Referring to FIG. 12, in operation 1220, according to an embodiment, the processor of the electronic device may determine similarities between the first style vector and second style vectors corresponding to each of second penmanship supported by the penmanship modification model. The similarities of the operation 1220 may be Euclidean distances of each of the second style vectors with respect to the first style vector, described with reference to the operation 1020 of FIG. 10. The similarities may indicate similarities of each of second penmanship with respect to the first penmanship.

Referring to FIG. 12, in operation 1230, according to an embodiment, the processor of the electronic device may generate a third style vector corresponding to a third penmanship in which all of the first penmanship and the second penmanship are combined by combining the second style vectors based on the similarities determined based on the operation 1220. Because the second style vectors are combined based on the similarities of the operation 1220, the third penmanship represented by the third style vector may include elements similar to the first penmanship as new penmanship in which the second penmanship are combined.

Referring to FIG. 12, in operation 1240, according to an embodiment, the processor of the electronic device may obtain a second handwriting content having the third penmanship by using the penmanship modification model to which the third style vector and the first handwriting content are inputted. The operation 1240 of FIG. 12 may be performed similarly to the operation 820 of FIG. 8, the operation 930 of FIG. 9, the operation 1030 of FIG. 10, and/or the operation 1140 of FIG. 11. The processor may input, to a decoder of the penmanship modification model, a combination of a latent vector obtained from an encoder of the penmanship modification model to which the first handwriting content is inputted and the third style vector of the operation 1230. The processor may obtain, from the decoder, information associated with one or more strokes included in the second handwriting content.

Referring to FIG. 12, in operation 1250, according to an embodiment, the processor of the electronic device may provide the second handwriting content as a result of modifying penmanship of the first handwriting content. The operation 1250 of FIG. 12 may be performed similarly to the operation 1040 of FIG. 10 and/or the operation 1150 of FIG. 11 and/or the operation 830 of FIG. 8. The processor may provide or display the second handwriting content having new penmanship in which the second penmanship supported by the penmanship modification model are combined, by using the third style vector of the operation 1230. The second penmanship may be combined based on similarities with first penmanship (e.g., penmanship of the user who inputs the first handwriting content) of the first handwriting content. By using combination of penmanship, the processor may generate or provide a handwriting content having characteristics of both the penmanship of the user of the electronic device and specialized penmanship (e.g., penmanship of an expert and/or a celebrity) used to train the penmanship modification model. For example, the second handwriting content provided by performing the operation 1250 may have a characteristic of the penmanship of the user of the electronic device while having a characteristic of penmanship of another user (e.g., a penmanship expert).

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

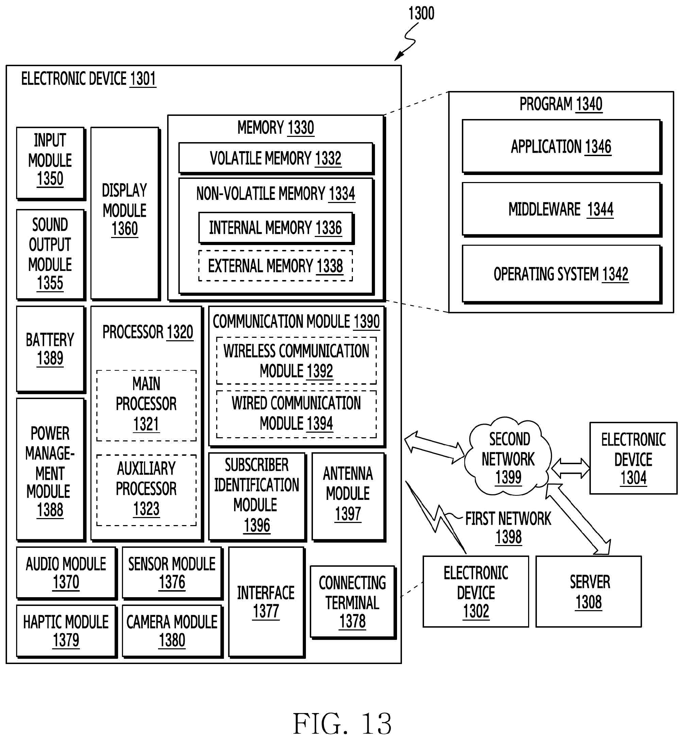

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 1301 of FIG. 13 may be an example of the electronic device 101 of FIG. 1.

In an embodiment, in order to modify penmanship of characters represented by a plurality of strokes included in a handwriting content, a method of modifying a shape of the plurality of strokes may be required. As described above, according to an embodiment, an electronic device (e.g., the electronic device 101 of FIG. 1 and/or the electronic device 1301 of FIG. 13) may comprise a display (e.g., the display 110 of FIG. 1 and/or FIG. 2) and a processor (e.g., the processor 210 of FIG. 2). The processor may be configured to, based on detecting an external object being dragged on the display, display, within the display, a stroke (e.g., the stroke 132 of FIG. 1) representing a path on the display along which the external object is dragged. The processor may be configured to, in response to a noise segment (e.g., the noise segment 134) of the stroke that is detected by using a plurality of points included in the stroke, execute a function to delete the noise segment from the stroke. The processor may be configured to, by using a model (e.g., the penmanship modification model 236 of FIG. 2) to modify penmanship of one or more characters represented by a plurality of strokes (e.g., the plurality of strokes 140 of FIG. 1) including the stroke of which the noise segment is deleted, modify a shape of at least one of the plurality of strokes. In an embodiment, the electronic device may delete a noise segment of strokes included in the handwriting content before modifying the penmanship of the handwriting content.

For example, the processor may be configured to, by using the model trained based on handwriting where a plurality of penmanship are applied, modify the shape of the at least one of the plurality of strokes.

For example, the processor may be configured to modify the shape by inputting, to the model, preference information indicating at least one penmanship to be used to modify the shape among the plurality of penmanship.

For example, the processor may be configured to combine the preference information to a latent vector that is obtained from an encoder in the model and to be inputted to a decoder in the model.

For example, the processor may be configured to modify the shape by using the preference information indicating a combination of the plurality of penmanship based on weights respectively corresponding to the plurality of penmanship.

For example, the processor may be configured to determine whether to maintain the penmanship of the one or more characters by using a weight corresponding to the penmanship of the one or more characters indicated by the preference information.

For example, the processor may be configured to, by using at least one of an angle or a distance between a first point among the plurality of points corresponding to an end of the stoke and a second point among the plurality of points, determine whether a segment of the stroke distinguished by the first point and the second point is corresponding to the noise segment.

For example, the processor may be configured to, based on whether a segment of the stroke including an end of the stroke is corresponding to a serif, determine the segment of the stroke as the noise segment.

For example, the processor may be configured to, by using a second model different from a first model to modify the penmanship, compute probabilities that the plurality of points are respectively matched to a boundary point of the noise segment.

For example, the processor may be configured to display, within the display, a first visual object to replace the plurality of strokes to text including the one or more characters and a second visual object to modify the penmanship of the one or more characters represented by the plurality of strokes. The processor may be configured to modify the shape by using the model in response to an input associated with the second visual object.

As described above, according to an embodiment, a method of an electronic device comprising a display and a processor is provided. The method may comprise, based on detecting an external object being dragged on the display, displaying (e.g., the operation 310 of FIG. 3), within the display, a stroke representing a path on the display along which the external object is dragged. The method may comprise, in response to a noise segment of the stroke that is detected by using a plurality of points included in the stroke, executing (e.g., the operation 320 of FIG. 3) a function to delete the noise segment from the stroke. The method may comprise, by using a model to modify penmanship of one or more characters represented by a plurality of strokes including the stroke of which the noise segment is deleted, modifying (e.g., the operation 330 of FIG. 3) a shape of at least one of the plurality of strokes.

For example, the modifying may comprise, by using the model trained based on handwriting where a plurality of penmanship are applied, modifying the shape of the at least one of the plurality of strokes.

For example, the modifying may comprise modifying the shape by inputting, to the model, preference information indicating at least one penmanship to be used to modify the shape among the plurality of penmanship.

For example, the modifying may comprise combining the preference information to a latent vector that is obtained from an encoder in the model and to be inputted to a decoder in the model.

For example, the modifying may comprise modifying the shape by using the preference information indicating a combination of the plurality of penmanship based on weights respectively corresponding to the plurality of penmanship.

For example, the modifying may comprise determining whether to maintain the penmanship of the one or more characters by using a weight corresponding to the penmanship of the one or more characters indicated by the preference information.

For example, the executing may comprise, by using at least one of an angle or a distance between a first point among the plurality of points corresponding to an end of the stoke and a second point among the plurality of points, determining whether a segment of the stroke distinguished by the first point and the second point is corresponding to the noise segment.

For example, the executing may comprise, based on whether a segment of the stroke including an end of the stroke is corresponding to a serif, determining the segment of the stroke as the noise segment.

For example, the executing may comprise, by using a second model different from a first model to modify the penmanship, computing probabilities that the plurality of points are respectively matched to a boundary point of the noise segment.

For example, the method may comprise displaying, within the display, a first visual object to replace the plurality of strokes to text including the one or more characters and a second visual object to modify the penmanship of the one or more characters represented by the plurality of strokes. The modifying may comprise modifying the shape by using the model in response to an input associated with the second visual object.

As described above, according to an embodiment, an electronic device may comprise a display, and a processor. The processor may be configured to, based on detecting an external object being dragged on the display, identify an input indicating to draw a plurality of first strokes. The processor may be configured to execute a preprocess function to reduce a serif formed at an end of at least one of the plurality of first strokes. The processor may be configured to display, within the display, a plurality of second strokes which are corresponding to the plurality of first strokes modified by the preprocess function and are having a second penmanship different from a first penmanship of the plurality of first strokes.

For example, the processor may be configured to, by using the model trained based on handwriting where a plurality of penmanship including the second penmanship are applied, obtain the plurality of second strokes.

For example, the processor may be configured to, by using at least one of angles or distances between points included in the plurality of first strokes, detect the serif.

For example, the processor may be configured to, based on execution of the preprocess function, delete one or more points representing the serif.

As described above, in an embodiment, a method of an electronic device comprising a display and a processor is provided. The method may comprise, based on detecting an external object being dragged on the display, identifying an input indicating to draw a plurality of first strokes. The method may comprise executing a preprocess function to reduce a serif formed at an end of at least one of the plurality of first strokes. The method may comprise displaying, within the display, a plurality of second strokes which are corresponding to the plurality of first strokes modified by the preprocess function and are having a second penmanship different from a first penmanship of the plurality of first strokes.

For example, the displaying may comprise, by using the model trained based on handwriting where a plurality of penmanship including the second penmanship are applied, obtaining the plurality of second strokes.

For example, the executing may comprise, by using at least one of angles or distances between points included in the plurality of first strokes, detecting the serif.

For example, the executing may comprise, based on execution of the preprocess function, deleting one or more points representing the serif.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device (101; 1301), comprising:
a display (110),
memory, comprising one or more storage media, storing instructions; and
at least one processor (210) comprising processing circuitry, wherein the instructions, when executed individually or collectively by the at least one processor, cause the electronic device to:
based on detecting an external object being dragged on the display, display, within the display, a stroke (132) representing a path on the display along which the external object is dragged;
in response to a noise segment (134) of the stroke that is detected by using a plurality of points included in the stroke, execute a function to delete the noise segment from the stroke; and
by using a model (236) to modify penmanship of one or more characters represented by a plurality of strokes (140) including the stroke (142) of which the noise segment is deleted, modify a shape of at least one of the plurality of strokes.

2. The electronic device of claim 1, wherein the instructions, when executed individually or collectively by the at least one processor, cause the electronic device to:
by using the model trained based on handwriting where a plurality of penmanship are applied, modify the shape of the at least one of the plurality of strokes.

3. The electronic device of claim 1 to claim 2, wherein the instructions, when executed individually or collectively by the at least one processor, cause the electronic device to:
modify the shape by inputting, to the model, preference information indicating at least one penmanship to be used to modify the shape among the plurality of penmanship.

4. The electronic device of claim 1 to claim 3, wherein the instructions, when executed individually or collectively by the at least one processor, cause the electronic device to:
combine the preference information to a latent vector that is obtained from an encoder in the model and to be inputted to a decoder in the model.

5. The electronic device of claim 1 to claim 4, wherein the instructions, when executed individually or collectively by the at least one processor, cause the electronic device to:
modify the shape by using the preference information indicating a combination of the plurality of penmanship based on weights respectively corresponding to the plurality of penmanship.

6. The electronic device of claim 1 to claim 5, wherein the instructions, when executed individually or collectively by the at least one processor, cause the electronic device to:
determine whether to maintain the penmanship of the one or more characters by using a weight corresponding to the penmanship of the one or more characters indicated by the preference information.

7. The electronic device of claim 1 to claim 6, wherein the instructions, when executed individually or collectively by the at least one processor, cause the electronic device to:
by using at least one of an angle or a distance between a first point among the plurality of points corresponding to an end of the stoke and a second point among the plurality of points, determine whether a segment of the stroke distinguished by the first point and the second point is corresponding to the noise segment.

8. The electronic device of claim 1 to claim 7, wherein the instructions, when executed individually or collectively by the at least one processor, cause the electronic device to:
based on whether a segment of the stroke including an end of the stroke is corresponding to a serif, determine the segment of the stroke as the noise segment.

9. The electronic device of claim 1 to claim 8, wherein the instructions, when executed individually or collectively by the at least one processor, cause the electronic device to:
by using a second model different from a first model to modify the penmanship, compute probabilities that the plurality of points are respectively matched to a boundary point of the noise segment.

10. The electronic device of claim 1 to claim 9, wherein the instructions, when executed individually or collectively by the at least one processor, cause the electronic device to:
display, within the display, a first visual object to replace the plurality of strokes to text including the one or more characters and a second visual object to modify the penmanship of the one or more characters represented by the plurality of strokes; and
modify the shape by using the model in response to an input associated with the second visual object.

11. A method of an electronic device comprising a display and a processor, comprising:
based on detecting an external object being dragged on the display, displaying (310), within the display, a stroke representing a path on the display along which the external object is dragged;
in response to a noise segment of the stroke that is detected by using a plurality of points included in the stroke, executing (320) a function to delete the noise segment from the stroke; and
by using a model to modify penmanship of one or more characters represented by a plurality of strokes including the stroke of which the noise segment is deleted, modifying (330) a shape of at least one of the plurality of strokes.

12. The method of claim 11, wherein the modifying comprises:
by using the model trained based on handwriting where a plurality of penmanship are applied, modifying the shape of the at least one of the plurality of strokes.

13. The method of claim 11 to claim 12, wherein the modifying comprises:
modifying the shape by inputting, to the model, preference information indicating at least one penmanship to be used to modify the shape among the plurality of penmanship.

14. The method of claim 11 to claim 13, wherein the modifying comprises:
combining the preference information to a latent vector that is obtained from an encoder in the model and to be inputted to a decoder in the model.

15. The method of claim 11 to claim 14, wherein the modifying comprises:
modifying the shape by using the preference information indicating a combination of the plurality of penmanship based on weights respectively corresponding to the plurality of penmanship.
